# EUROPÄISCHE PATENTSCHRIFT

(11) **EP 0 581 733 B1**
(45) Veröffentlichungstag und Bekanntmachung des Hinweises auf die Patenterteilung: **26.05.1999**
(21) Anmeldenummer: 93810508.7
(22) Anmeldetag: 14.07.1993
(51) Int. Cl.: C09B 62/03, C09B 62/44

(54) **Reaktivfarbstoffe, Verfahren zu deren Herstellung und deren Verwendung**
Reactive dyes, process for their manufacture and their use
Colorants réactifs, procédé pour leur préparation et leur utilisation

(30) Priorität: 23.07.1992 CH 2318/92
(43) Veröffentlichungstag der Anmeldung: 02.02.1994
(73) Patentinhaber: Ciba Specialty Chemicals Holding Inc., 4057 Basel (CH)
(72) Erfinder: Deitz, Rolf, CH-4058 Basel (CH); Tzikas, Athanassios, Dr., CH-4133 Pratteln (CH)

(56) Entgegenhaltungen:
- EP-A- 0 018 590
- CHEMICAL ABSTRACTS, Band 110, Nr. 8, 20. Februar 1989, Zusammenfassung Nr. 59521p, Seite 527, Columbus, Ohio, US; & CS 247 026 (HORYNA, JAROSLAV) 15-01-1988

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 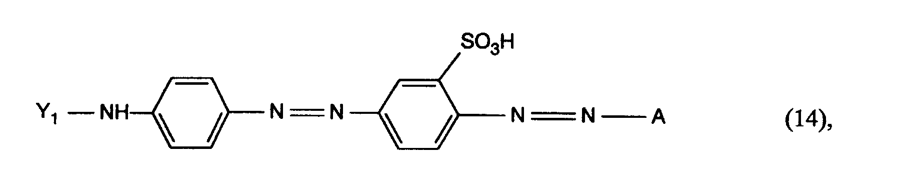
worin A ein Rest der Benzolreihe, der Naphthalinreihe oder der heterocyclischen Reihe ist, und
Y₁ ein gegebenenfalls weitersubstituierter Halogentriazin- oder
Halogenpyrimidin-Reaktivrest ist.

Aus der EP-A-0 018 590 und Chemical Abstracts 110: 59521p sind Farbstoffe bekannt, welche sich von den Farbstoffen der vorliegenden Erfindung hinsichtlich der Bindungsposition des Restes -NH-Y₁ sowie hinsichtlich der Substituenten der Phenylen-Mittelkomponente unterscheiden.

Als Reaktivreste kommen für Y₁ insbesondere solche der Formeln 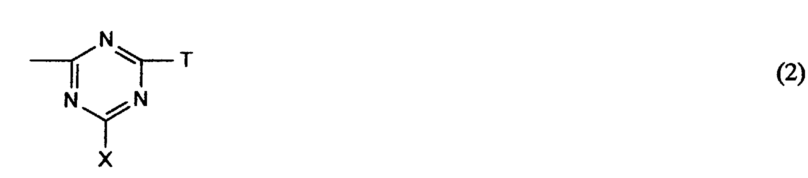 oder 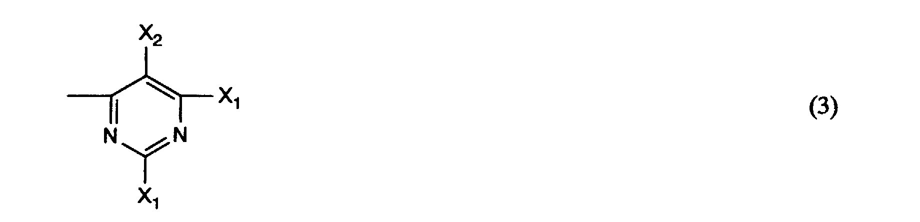 in Betracht, worin X eine als Anion abspaltbare Gruppe und
T eine als Anion abspaltbare Gruppe, ein nicht-reaktiver Rest oder ein faserreaktiver Rest der Formel 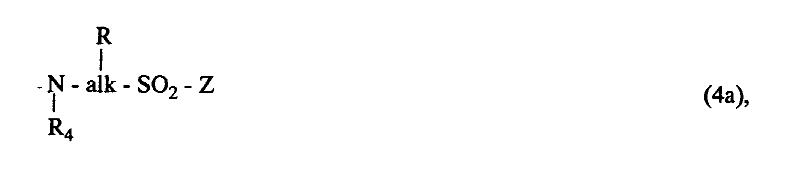 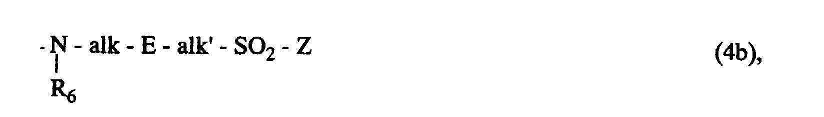 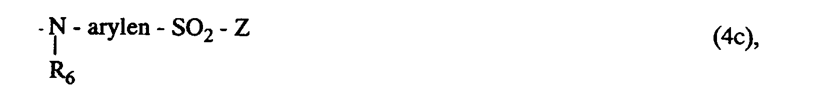 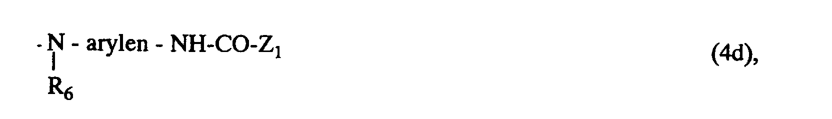 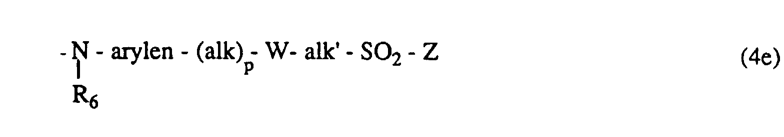 oder 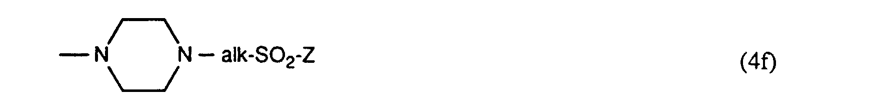 ist, wobei W eine Gruppe der Formel -SO₂-NR₄-, -CONR₄- oder -NR₄CO- ist, R₄ Wasserstoff, unsubstituiertes oder durch Hydroxy, Sulfo, Sulfato, Carboxy oder Cyano substituiertes C₁-C₄-Alkyl oder ein Rest der Formel 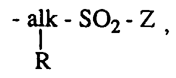 R₆ Wasserstoff oder unsubstituiertes oder durch Hydroxy, Sulfo, Sulfato, Carboxy oder Cyano substituiertes C₁-C₄-Alkyl, R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z eine Gruppe der Formel -CH=CH₂ oder -CH₂-CH₂-U₁ und U₁ eine Abgangsgruppe ist, Z₁ eine Gruppe der Formel 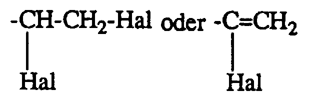 und Hal Halogen bedeutet, E der Rest -O- oder -NR₅- und R₅ Wasserstoff oder C₁-C₄-Alkyl ist, alk und alk' unabhängig voneinander C₁-C₆-Alkylen bedeuten, arylen einen unsubstituierten oder durch Sulfo, Carboxy, C₁-C₄-Alkyl, C₁-C₄-Alkoxy, C₂-C₄-Alkanyolamino oder Halogen substituierten Phenylen- oder Naphthylenrest bedeutet und p 0 oder 1 ist,
einer der Reste X₁ eine als Anion abspaltbare Gruppe ist und der andere Rest X₁ ein nicht-reaktiver Substituent oder ein Rest der Formeln (4a) bis (4f) oder eine als Anion abspaltbare Gruppe ist und
X₂ ein negativer Substituent ist.

Geeignete Abgangsgruppen U₁ sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U₁ eine Gruppe der Formel -Cl, -OSO₃H, -SSO₃H, -OCO-CH_{3,} -OCO-C₆H₅ oder -OPO₃H₂, insbesondere -Cl oder -OSO₃H, vorzugsweise -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

Arylen ist vorzugsweise ein 1,3- oder 1,4-Phenylenrest, der unsubstituiert oder z.B. durch Sulfo, Methyl, Methoxy oder Carboxy substituiert ist.

R bedeutet bevorzugt Wasserstoff.

R₄ ist vorzugsweise Wasserstoff oder C₁-C₄-Alkyl, wie Methyl, Aethyl, Propyl, Isopropyl, Butyl, Isobutyl, sek.-Butyl oder tert.-Butyl. Besonders bevorzugt ist R₄ Wasserstoff.

R₆ bedeutet bevorzugt Wasserstoff, Methyl oder Aethyl, insbesondere Wasserstoff.

E steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

Hal im Rest Z₁ ist vorzugsweise Chlor oder insbesondere Brom.

Bevorzugt ist p die Zahl 0.

Bevorzugt sind solche Reaktivreste, worin W eine Gruppe der Formel -CONH- oder -NHCO-, R, R₄, R₅ und R₆ Wasserstoff, E der Rest -O- oder -NH- und U₁ eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H und vorzugsweise -OSO₃H, ist.

X steht z.B. für Halogen, wie Fluor, Chlor oder Brom, Sulfo, C₁-C₄-Alkylsulfonyl oder Phenylsulfonyl und bevorzugt für Halogen, insbesondere für Fluor oder Chlor.

Bedeutet T eine als Anion abspaltbare Gruppe, so handelt es sich hierbei z.B. um Halogen, wie Fluor, Chlor oder Brom, Sulfo, C₁-C₄-Alkylsulfonyl oder Phenylsulfonyl und bevorzugt um Halogen, insbesondere um Fluor oder Chlor.

Steht T für einen nicht-reaktiven Rest, so kann dieser z.B. Hydroxy, C₁-C₄-Alkoxy, C₁-C₄-Alkylthio, Morpholino oder gegebenenfalls substituiertes Amino sein. Als gegebenenfalls substituiertes Amino kommt für T unsubstituiertes Amino oder beispielsweise N-C₁-C₄-Alkylamino oder N,N-Di-C₁-C₄-Alkylamino, wobei das Alkyl gegebenenfalls z.B. durch Sulfo, Sulfato, Hydroxy, Carboxy oder Phenyl substituiert ist, Cyclohexylamino, N-C₁-C₄-Alkyl-N-phenylamino, Phenylamino, Naphthylamino oder N-C₁-C₄-Alkyl-N-naphthylamino in Betracht, wobei das Phenyl oder Naphthyl gegebenenfalls z.B. durch C₁-C₄-Alkyl, C₁-C₄-Alkoxy, C₂-C₄-Alkanoylamino, Carboxy, Sulfo oder Halogen substituiert ist, in Betracht.

Beispiele für geeignete nicht-reaktive Reste T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, 1,5-Disulfo-2-naphthylamino N-Äthyl-N-phenylamino, N-Methyl-N-phenylamino, Methoxy, Äthoxy, n- oder iso-Propoxy sowie Hydroxy.

Als nicht-reaktiver Rest hat T vorzugsweise die Bedeutung C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino.

Besonders bevorzugte nicht-reaktive Reste T sind C₁-C₄-Alkoxy, Morpholino, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino.

Bevorzugt handelt es sich bei dem Rest T um Halogen, insbesondere Fluor oder Chlor, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino, oder um einen reaktiven Rest der Formeln (4a) bis (4f), für welche die oben angegebenen Bedeutungen und Bevorzugungen gelten.

Bei dem als Anion abspaltbaren Rest X₁ handelt es sich vorzugsweise um Halogen, insbesondere um Fluor oder Chlor.

Handelt es sich bei X₁ um einen nicht-reaktiven Substituenten, so kommen z.B. die oben für T in der Bedeutung als nicht-reaktiver Substituent genannten Bedeutungen und Bevorzugungen in Betracht.

Besonders bevorzugt handelt es sich bei dem Rest X₁ um Halogen, insbesondere um Fluor oder Chlor.

Beispiele für geeignete Reste X₂ sind Nitro, Cyan, C₁-C₄-Alkylsulfonyl, Carboxy, Chlor, Hydroxy, C₁-C₄-Alkoxysulfonyl, C₁-C₄-Alkylsulfinyl, C₁-C₄-Alkoxycarbonyl oder C₂-C₄-Alkanoyl, wobei die Bedeutungen Chlor, Cyano und Methylsulfonyl für X₂ bevorzugt sind. Besonders bevorzugt ist X₂ Halogen, insbesondere Chlor.

Bevorzugt sind Reaktivreste der Formel (2), worin X Halogen ist und für T die oben angegebenen Bevorzugungen gelten.

Als Reaktivreste der Formel (3) sind solche bevorzugt, worin beide Substituenten X₁ Halogen, insbesondere Chlor oder Fluor, bedeuten und X₂ Halogen, insbesondere Chlor, ist.

Besonders bevorzugt als Reaktivreste der Formel (3) sind solche, worin beide Substituenten X₁ Fluor oder Chlor bedeuten und X₂ Chlor ist.

Bevorzugt ist Y₁ ein Reaktivrest der Formel (2) oder (3), worin X, X₁ und X₂ Halogen bedeuten und T Halogen, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino oder insbesondere ein faserreaktiver Rest der Formeln (4a) bis (4f) ist, wobei für die Reaktivreste der Formeln (4a) bis (4f) die oben angegebenen Bedeutungen und Bevorzugungen gelten.

Der Rest A im Reaktivfarbstoff der Formel (14) kann die bei organischen Farbstoffen üblichen Substituenten enthalten.

Als Beispiele für Substituenten im Rest A seien genannt: Alkylgruppen mit 1 bis 12 Kohlenstoffatomen, insbesondere 1 bis 4 Kohlenstoffatomen, wie Methyl, Aethyl, Propyl, Isopropyl oder Butyl, Alkoxygruppen mit 1 bis 8 Kohlenstoffatomen, insbesondere 1 bis 4 Kohlenstoffatomen, wie Methoxy, Aethoxy, Propoxy, Isopropoxy oder Butoxy, Alkanoylaminogruppen mit 2 bis 8 Kohlenstoffatomen, insbesondere 2 bis 4 Kohlenstoffatomen, wie Acetylamino oder Propionylamino, Phenyl- oder Naphthylamino, Alkoxycarbonylaminogruppen mit 2 bis 8 Kohlenstoffatomen, insbesondere 2 bis 4 Kohlenstoffatomen, Alkanoylgruppen mit 2 bis 8 Kohlenstoffatomen, insbesondere 2 bis 4 Kohlenstoffatomen, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Phenyl- oder Naphthylsulfonyl, Alkoxycarbonyl mit 1 bis 4 Kohlenstoffatomen im Alkoxyrest, wie Methoxycarbonyl oder Aethoxycarbonyl, Benzoyl, gegebenenfalls am Stickstoff durch C₁-C₄-Alkyl substituiertes Benzoylamino, Phenyl, Naphthyl, Amino, durch C₁-C₁₂-Alkyl, Phenyl, Naphthyl oder Cyano mono- oder disubstituiertes Amino, Trifluormethyl, Nitro, Cyano, Hydroxyl, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Carboxy, Sulfomethyl, Sulfo oder Sulfato sowie faserreaktive Reste, wobei die einen Alkyl-, Phenyl- oder Naphthylrest enthaltenden Substituenten im Alkyl-, Phenyl- oder Naphthylrest weitersubstituiert sein können, wie z.B. durch die oben für A genannten Substituenten. Die Alkylreste können zudem durch Sauerstoff (-O-) unterbrochen sein. Bevorzugt als einen Alkylrest enthaltende Substituenten sind solche, welche im Alkylrest durch Sauerstoff unterbrochen sein können (mit Ausnahme von Methyl) und beispielsweise durch Hydroxy, Sulfo, Sulfato, Cyano, gegebenenfalls durch C₁-C₄-Alkyl weitersubstituiertes C₅-C₇-Cycloalkyl oder gegebenenfalls durch C₁-C₄-Alkyl, C₁-C₄-Alkoxy, C₂-C₄-Alkanoylamino, Halogen oder Sulfo weitersubstituiertes Phenyl oder Naphthyl substituiert sein können. Bevorzugt als einen Phenyl- oder Naphthylrest enthaltende Substituenten sind solche, welche im Phenyl- oder Naphthylrest durch C₁-C₄-Alkyl, C₁-C₄-Alkoxy, C₂-C₄-Alkanoylamino, Halogen oder Sulfo weitersubstituiert sein können.

Als faserreaktive Reste im Rest A kommen z.B. Reaktivreste der Formeln (2) und (3) in Betracht, welche insbesondere über ein Brückenglied der Formel -N(R')- an den Rest A gebunden sind, wobei R' Wasserstoff oder unsubstituiertes oder durch Carboxy, Cyano, Hydroxy, Sulfo oder Sulfato substituiertes C₁-C₄-Alkyl ist und für die Reaktivreste der Formeln (2) und (3) die oben angegebenen Bedeutungen und Bevorzugungen gelten.

Besonders bevorzugte faserreaktive Reste im Rest A sind solche der Formeln (2) und (3), worin X, X₁ und X₂ Halogen, insbesondere Fluor oder Chlor, sind und T eine als Anion abspaltbare Gruppe oder ein nicht-reaktiver Rest ist.

Ganz besonders bevorzugte faserreaktive Reste im Rest A sind solche der Formeln (2) und (3), worin X, X₁ und X₂ Halogen, insbesondere Fluor oder Chlor, sind und T Halogen, Hydroxy, Sulfo, C₁-C₄-Alkoxy, C₁-C₄-Alkylthio, C₁-C₄-Alkylsulfonyl, Phenylsulfonyl, Morpholino oder gegebenenfalls substituiertes Amino ist. Hierbei handelt es sich bei dem Rest T insbesondere um Halogen, C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino. Ganz besonders bevorzugt ist der Rest T im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino, wobei als Substituent insbesondere Sulfo in Betracht kommt.

Der Rest A ist bevorzugt ein gegebenenfalls substituierter Benzol-, Naphthalin-, 6-Hydroxypyrid-(2)-on-, Pyrazol- oder Pyrimidinrest, wobei für die Substituenten insbesondere die oben angegebenen Bedeutungen und Bevorzugungen gelten.

Bevorzugte Substituenten des Restes A sind C₁-C₄-Alkyl, C₁-C₄-Alkoxy, C₂-C₆-Alkanoylamino, C₂-C₈-Alkoxycarbonylamino, gegebenenfalls durch C₁-C₄-Alkyl, C₁-C₄-Alkoxy, C₂-C₄-Alkanoylamino, Halogen oder Sulfo substituiertes Phenyl, Phenylamino oder Benzoylamino, Cyano, Hydroxyl, Carbamoyl, Carboxyl, Sulfomethyl, Ureido, Halogen, Sulfo, Sulfato, Amino oder durch Cyano oder C₁-C₁₂-Alkyl substituiertes Amino, wobei der C₁-C₁₂-Alkylrest gegebenenfalls durch Phenyl, Naphthyl, C₅-C₇-Cycloalkyl, Hydroxyl, Sulfo oder Sulfato substituiert ist, der Phenyl- und Naphthylrest durch C₁-C₄-Alkyl, C₁-C₄-Alkoxy, C₂-C₄-Alkanoylamino, Halogen oder Sulfo und der C₅-C₇-Cycloalkylrest durch C₁-C₄-Alkyl weitersubstituiert sein kann und der C₁-C₁₂-Alkylrest mit Ausnahme von Methyl durch Sauerstoff unterbrochen sein kann. Als weitere bevorzugte Substituenten des Restes A kommen Reaktivreste in Betracht, für welche die oben angegebenen Bedeutungen und Bevorzugungen gelten.

Ganz besonders bevorzugt handelt es sich bei dem Rest A um einen Rest der Formel 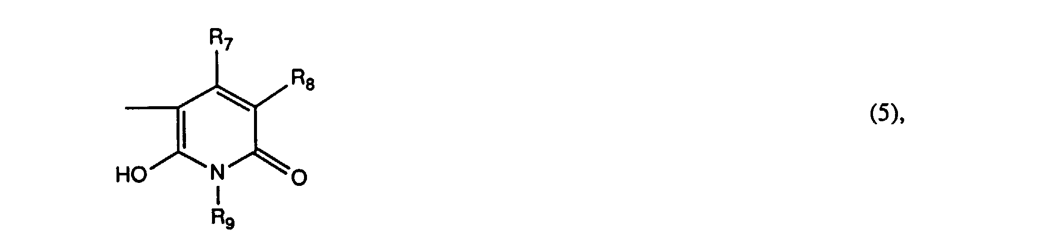 worin R₇ und R₉ unabhängig voneinander Wasserstoff, C₁-C₄-Alkyl oder gegebenenfalls durch C₁-C₄-Alkyl, C₁-C₄-Alkoxy, C₂-C₄-Alkanoylamino, Halogen oder Sulfo substituiertes Phenyl bedeuten und R₈ Wasserstoff, Cyano, Carbamoyl oder Sulfomethyl ist,
oder einen Rest der Formel 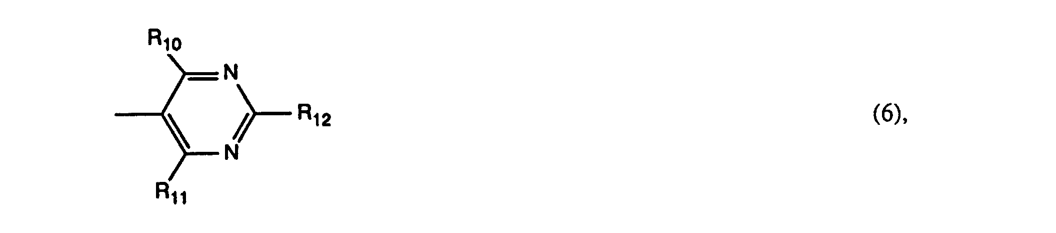 worin R₁₀ und R₁₁ unabhängig voneinander Hydroxyl, Amino oder durch C₁-C₁₂-Alkyl substituiertes Amino, worin der C₁-C₁₂-Alkylrest gegebenenfalls durch Hydroxyl, Sulfo oder Sulfato weitersubstituiert ist und mit Ausnahme von Methyl durch Sauerstoff unterbrochen sein kann, bedeuten und R₁₂ Wasserstoff, C₁-C₄-Alkyl, Hydroxyl, gegebenenfalls durch Cyano substituiertes Amino oder gegebenenfalls durch C₁-C₄-Alkyl, C₁-C₄-Alkoxy, C₂-C₄-Alkanoylamino, Halogen oder Sulfo substituiertes Phenyl bedeutet, oder einen Rest der Formel 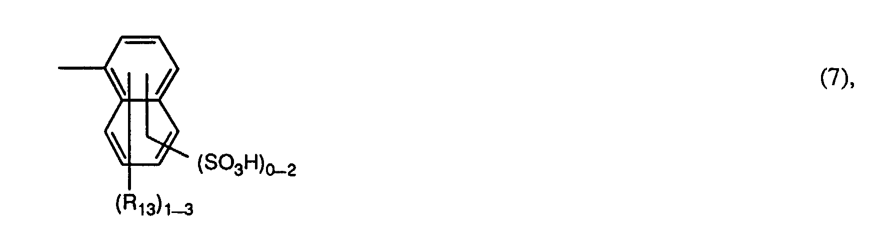 worin (R₁₃)₁₋₃ für 1 bis 3 gleiche oder voneinander verschiedene Substituenten aus der Gruppe Wasserstoff, C₁-C₄-Alkyl, C₁-C₄-Alkoxy, C₂-C₄-Alkanoylamino, Halogen, Hydroxyl, Amino oder N-mono- oder N,N-Di-C₁-C₄-Alkylamino steht, oder einen Rest der Formel 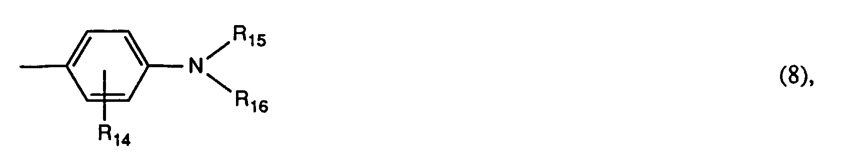 worin R₁₄ Wasserstoff, C₁-C₄-Alkyl, C₁-C₄-Alkoxy, C₂-C₆-Alkanoylamino, C₂-C₈-Alkoxycarbonylamino, Ureido, Halogen oder Sulfo ist und R₁₅ und R₁₆ unabhängig voneinander Wasserstoff, ein gegebenenfalls weitersubstituierter Halogenpyrimidin- oder Halogentriazin-Reaktivrest oder gegebenenfalls durch Hydroxy, Sulfo, Sulfato, Phenyl oder C₅-C₇-Cycloalkyl substituiertes C₁-C₈-Alkyl sind, wobei der Phenylrest durch C₁-C₄-Alkyl, C₁-C₄-Alkoxy, C₂-C₄-Alkanoylamino, Halogen oder Sulfo und der C₅-C₇-Cycloalkylrest durch C₁-C₄-Alkyl weitersubstituiert sein kann,
oder einen Rest der Formel 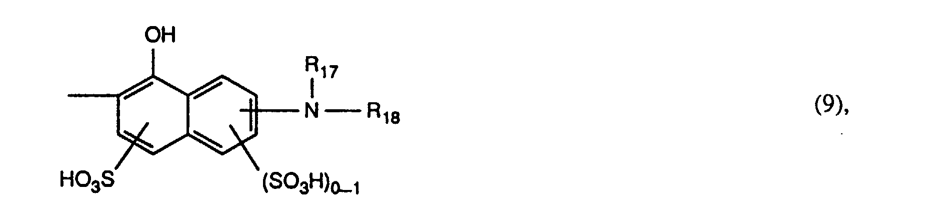 worin R₁₇ Wasserstoff oder C₁-C₄-Alkyl und R₁₈ C₂-C₆-Alkanoyl, gegebenenfalls durch C₁-C₄-Alkyl, C₁-C₄-Alkoxy, C₂-C₄-Alkanoylamino, Halogen oder Sulfo substituiertes Benzoyl oder einen gegebenenfalls weitersubstituierten Halogenpyrimidin- oder Halogentriazin-Reaktivrest bedeutet,
oder einen Rest der Formel 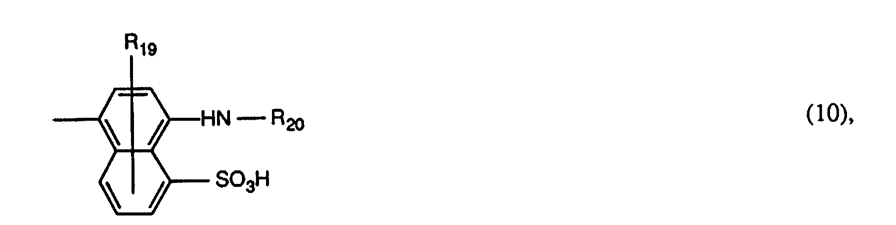 worin R₁₉ Wasserstoff, C₁-C₄-Alkyl, C₁-C₄-Alkoxy, C₂-C₄-Alkanoylamino, Halogen oder Sulfo ist und R₂₀ gegebenenfalls durch C₁-C₄-Alkyl, C₁-C₄-Alkoxy, C₂-C₄-Alkanoylamino, Halogen oder Sulfo substituiertes Phenyl oder einen gegebenenfalls weitersubstituierten Halogenpyrimidin- oder Halogentriazin-Reaktivrest bedeutet,
oder einen Rest der Formel 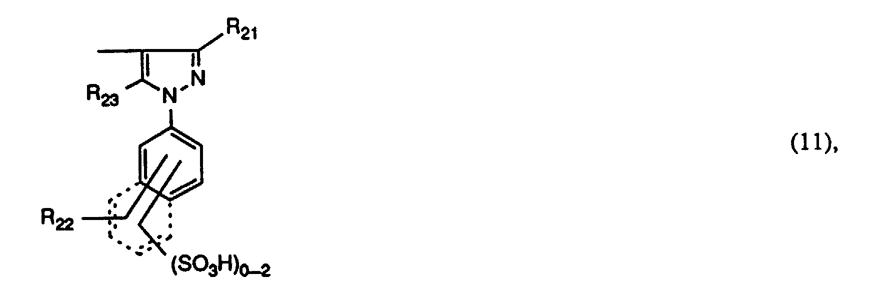 worin R₂₁ C₁-C₄-Alkyl oder Carboxyl, R₂₂ Wasserstoff, C₁-C₄-Alkyl, C₁-C₄-Alkoxy, C₂-C₄-Alkanoylamino oder Halogen und R₂₃ Hydroxyl oder Amino bedeutet.

Besonders bevorzugte Reste A sind die der Formeln (5) bis (9) und (11).

Bevorzugte Reste der Formel (5) sind solche, worin R₇ und R₉ C₁-C₄-Alkyl bedeuten. Für R₈ ist die Bedeutung als Cyano, Carbamoyl oder Sulfomethyl bevorzugt.

Bevorzugte Reste der Formel (6) sind solche, worin R₁₀ und R₁₁ unabhängig voneinander Hydroxyl, Amino oder durch C₁-C₈-Alkyl, insbesondere C₁-C₄-Alkyl, substituiertes Amino, worin der Alkylrest gegebenenfalls durch Hydroxyl, Sulfo oder Sulfato weitersubstituiert ist und mit Ausnahme von Methyl durch Sauerstoff unterbrochen sein kann, bedeuten. Für R₁₂ ist die Bedeutung als Hydroxyl, Phenyl oder gegebenenfalls durch Cyano substituiertes Amino bevorzugt.

Bevorzugte Reste der Formel (7) sind solche, worin R₁₃ für Wasserstoff, Hydroxyl, Amino oder N-C₁-C₄-Alkylamino steht. Vorzugsweise enthält der Rest der Formel (7) nur eine Sulfogruppe.

Bevorzugte Reste der Formel (8) sind solche, worin R₁₅ und Rₗ₆ unabhängig voneinander Wasserstoff, ein gegebenenfalls weitersubstituierter Halogentriazin- oder Halogenpyrimidin-Reaktivrest oder gegebenenfalls durch Hydroxy, Sulfo, Sulfato oder Phenyl substituiertes C₁-C₈-Alkyl sind, wobei der Phenylrest durch C₁-C₄-Alkyl, C₁-C₄-Alkoxy, C₂-C₄-Alkanoylamino, Halogen oder Sulfo, insbesondere durch Sulfo, weitersubstituiert sein kann. Der Rest R₁₄ ist vorzugsweise Wasserstoff, C₂-C₆-Alkanoylamino, Halogen, Ureido oder Sulfo, insbesondere Wasserstoff, C₂-C₆-Alkanoylamino oder Ureido.

Für R₁₇ im Rest der Formel (9) ist die Bedeutung als Wasserstoff bevorzugt.

Im Rest der Formel (11) handelt es sich bei dem in 1-Stellung gebundenen aromatischen Rest vorzugsweise um einen Phenylrest. R₂₁ ist bevorzugt C₁-C₄-Alkyl, insbesondere Methyl, R₂₂ ist bevorzugt Wasserstoff oder Sulfo, insbesondere Sulfo und R₂₃ ist bevorzugt Amino.

Vorzugsweise enthalten von den Resten der Formeln (5) bis (10) nur die Reste der Formeln (8) und (9) einen gegebenenfalls weitersubstituierten Halogenpyrimidin- oder Halogentriazin-Reaktivrest.

Als gegebenenfalls weitersubstituierter Halogenpyrimidin- oder Halogentriazin-Reaktivrest in den Resten der Formeln (8) bis (10) kommen bevorzugt die für den Rest A genannten Reaktivreste in Betracht, für welche die oben angegebenen Bedeutungen und Bevorzugungen gelten.

Ganz besonders bevorzugt sind Reaktivfarbstoffe der Formel (14), worin A ein Rest der Formeln (5) bis (9) oder (11) und Y₁ ein Rest der Formeln (2) oder (3) ist, wobei X, X₁ und X₂ Halogen bedeuten und T Halogen, im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino oder insbesondere ein faserreaktiver Rest der Formeln (4a) bis (4f) ist.

Gegenstand der Erfindung ist ferner ein Verfahren zur Herstellung der Reaktivfarbstoffe der Formel (14), welches dadurch gekennzeichnet ist, dass man ein Amin der Formel 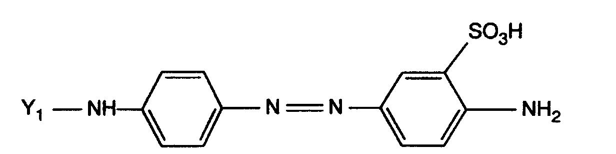 diazotiert und auf eine Verbindung der Formel

H-A (16)

kuppelt und gegebenenfalls eine weitere Umwandlungsreaktion anschliesst, wobei Y₁ und A die unter Formel (14) angegebenen Bedeutungen haben.

Die Diazotierung des Amins erfolgt in der Regel durch Einwirken salpetriger Säure in wässrig-mineralsaurer Lösung bei tiefer Temperatur, wie z.B. 0 bis 10°C, die Kupplung auf die Kupplungskomponente der Formel (16) bei sauren, neutralen bis schwach alkalischen pH-Werten, insbesondere bei einem pH-Wert von 2 bis 8.

Eine abgewandelte Ausführungsform des Verfahrens besteht darin, dass man zunächst einen Farbstoff herstellt, der eine Vorstufe des Reaktivrestes enthält, und diese nachträglich in die Endstufe umwandelt, z.B. durch Veresterung oder eine Additionsreaktion. Beispielsweise kann man einen Farbstoff, worin Z ein Rest HO-CH₂CH₂- ist, herstellen und dieses Produkt mit Schwefelsäure umsetzen, so dass die Hydroxygruppe in die Sulfatogruppe überführt wird. Die Sulfatierung der Hydroxygruppe erfolgt z.B. durch Umsetzung mit konzentrierter Schwefelsäure bei ca. 0°C bis mässig erhöhter Temperatur.

Ausserdem können Eliminierungsreaktionen an die Synthese angeschlossen werden. Beispielsweise kann man Reaktivfarbstoffe der Formel (14), welche Sulfatoäthylsulfonylreste enthalten, mit abspaltenden Mitteln, wie z.B. Natriumhydroxid, behandeln, wobei die Sulfatoäthylsulfonylreste in Vinylsulfonylreste übergehen.

Grundsätzlich lassen sich die Reaktivfarbstoffe der Formel (14) herstellen, indem man von Vorprodukten oder Zwischenprodukten für Farbstoffe, die faserreaktive Reste enthalten, ausgeht, oder diese faserreaktiven Reste in hierfür geeignete Zwischenprodukte mit Farbstoffcharakter einführt.

In dem erfindungsgemässen Verfahren zur Herstellung der Reaktivfarbstoffe der Formel (14) gelten für die Substituenten der Amine und der Verbindungen der Formel (16) die zuvor angegebenen Bedeutungen und Bevorzugungen.

Die Amine und die Verbindungen der Formel (16) sind bekannt oder können in Analogie zu bekannten Verfahren hergestellt werden.

So können die Amine z.B. erhalten werden, indem man eine Verbindung der Formel 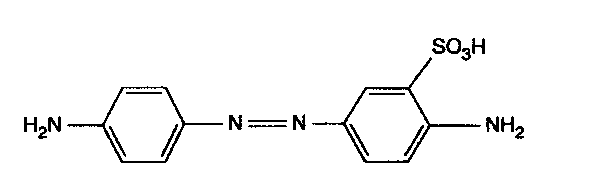 mit faserreaktiven Resten der Halogentriazin- oder Halogenpyrimidinreihe, insbesondere einer Verbindung der Formel 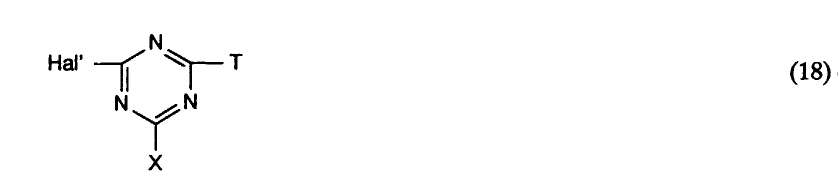 oder 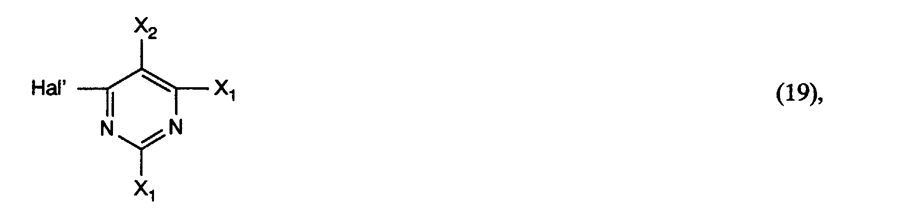 worin X, X₁, X₂ und T die oben angegebenen Bedeutngen haben und Hal' Halogen, insbesondere Fluor oder Chlor bedeutet, kondensiert.

Die Kondensation erfolgt in der Regel in wässriger Lösung, bei einer Temperatur von beispielsweise 0 bis 50°C und einem pH von z.B. 4 bis 9.

Die Reaktivfarbstoffe der Formel (14) eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (14) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die Reaktivfarbstoffe der Formel (14) zum Färben oder Bedrucken von cellulosehaltigen Fasermaterialien oder insbesondere natürlichen oder synthetischen Polyamidfasermaterialien.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (14) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (14) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 7,8 Teile Cyanurchlorid werden in 150 Teilen einer Eiswassersuspension verrührt. Dazu gibt man 11,8 Teile 4-β-Sulfatoäthylsulfonylanilin und lässt bei einem pH-Wert von 2,5 bis 3,5 und einer Temperatur von 0 bis 5°C während eines Zeitraumes von 2 bis 3 Stunden kondensieren. Zu dem erhaltenen Kondensationsprodukt wird eine Lösung aus 300 Teilen Wasser und 15,82 Teilen eines Amins der Formel 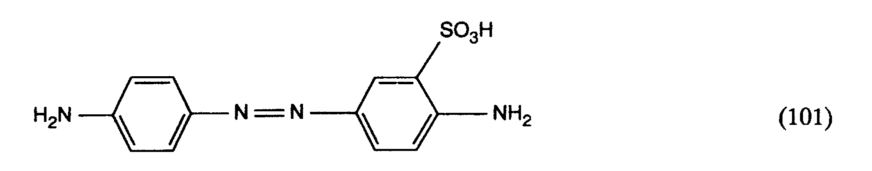 gegeben. Anschliessend wird die Reaktionsmischung mittels einer wässrigen Natriumhydroxidlösung auf einen pH-Wert von 5 gestellt und es wird bei diesem pH-Wert und einer Temperatur von 10 bis 25°C kondensiert. Das Produkt wird durch Zugabe von Kaliumchlorid ausgefällt und anschliessend abfiltriert. Nach Trocknung erhält man 40 Teile einer Verbindung der Formel

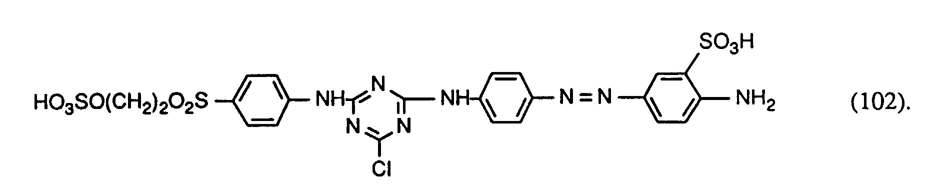

Anschliessend wird die so erhaltene Verbindung der Formel (102) in 500 Teile Wasser gegeben und in üblicher Weise diazotiert (durch Ansäuern mit Salzsäure und Zugabe einer wässrigen Natriumnitritlösung)

Nun werden 28 Teile β-Naphthol-6-sulfonsäure zugegeben und die Kupplung wird bei einem pH-Wert von 7 und einer Temperatur von 0 bis 20°C ausgeführt. Dann wird der erhaltene Farbstoff umkehrosmotisiert und gefriergetrocknet. Man erhält einen Farbstoff, der in Form der freien Säure der Verbindung der Formel 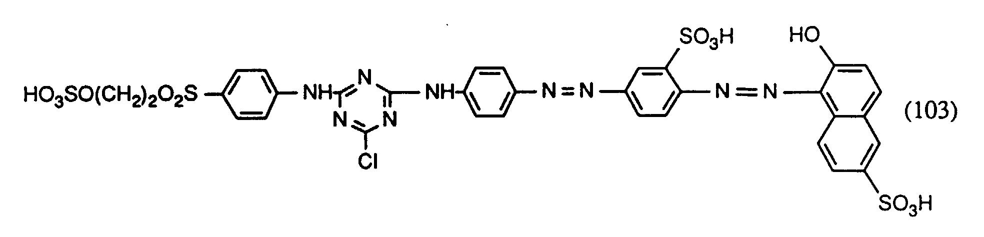 entspricht. Der Farbstoff der Formel (103) färbt Baumwolle und Wolle in roten Farbtönen.

Beispiele 2 bis 64: Analog dem Beispiel 1 können die in der folgenden Tabelle in Spalte 2 angegebenen Reaktivfarbstoffe erhalten werden, die Wolle und Baumwolle in den in Spalte 3 angegebenen Farbtönen färben.

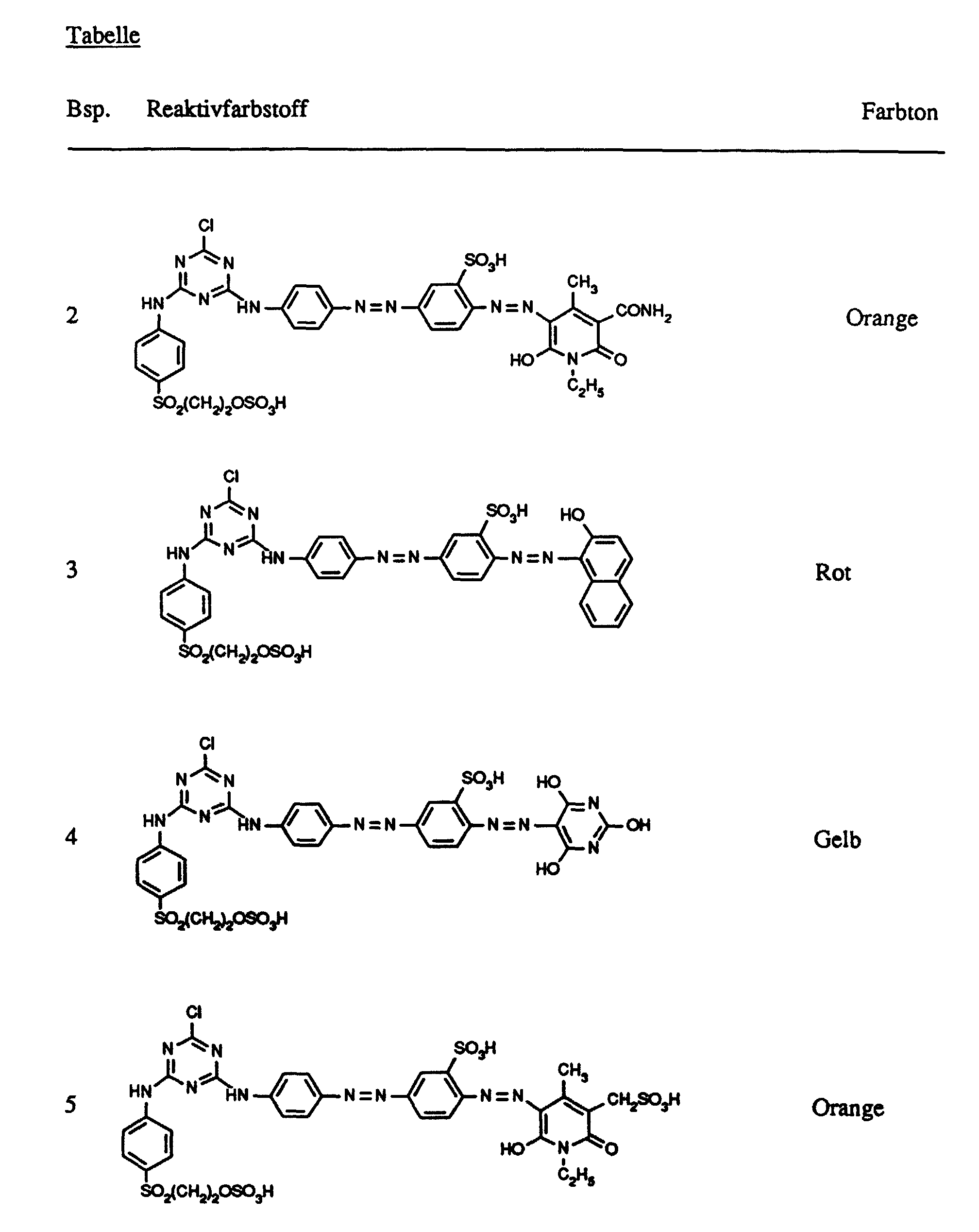

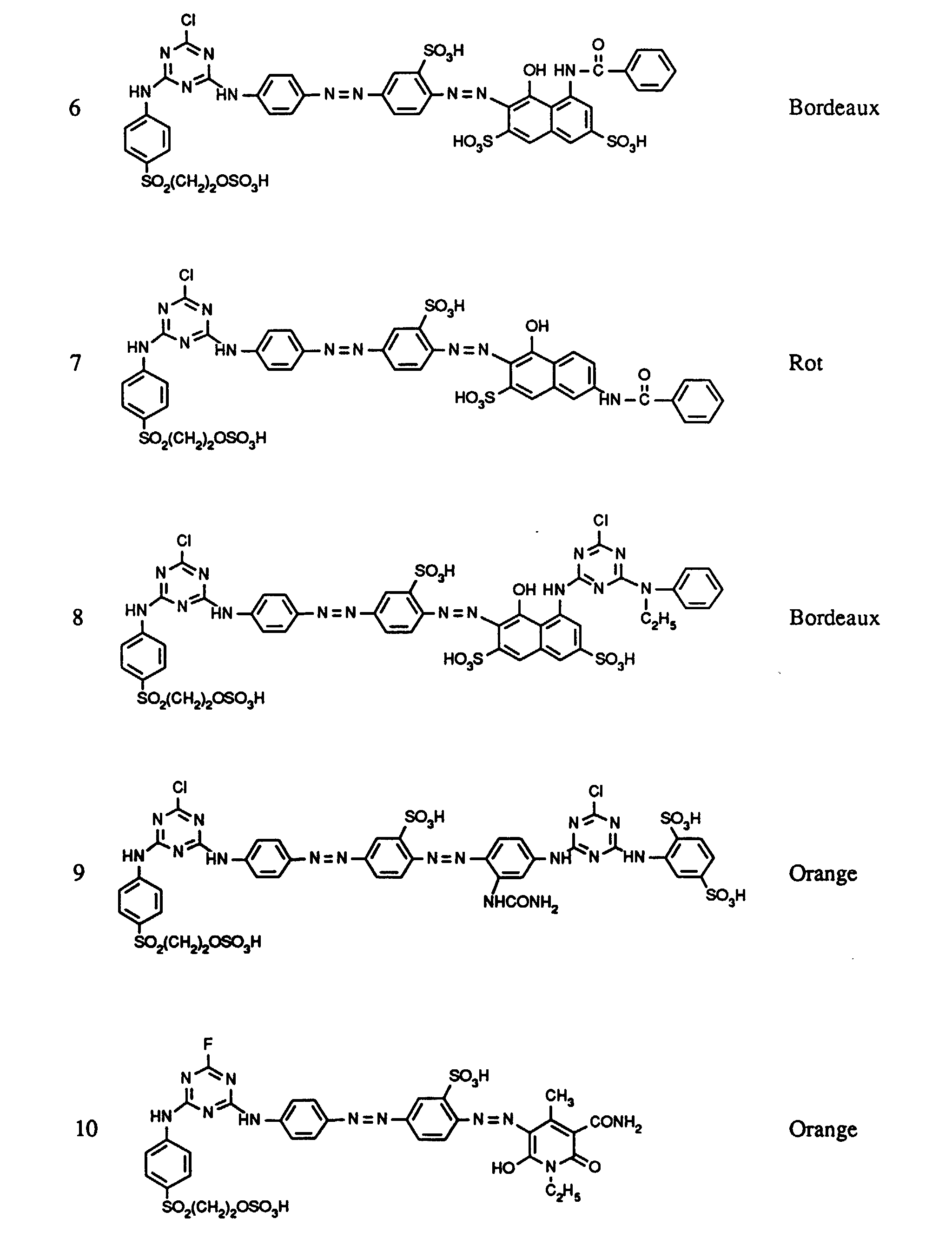

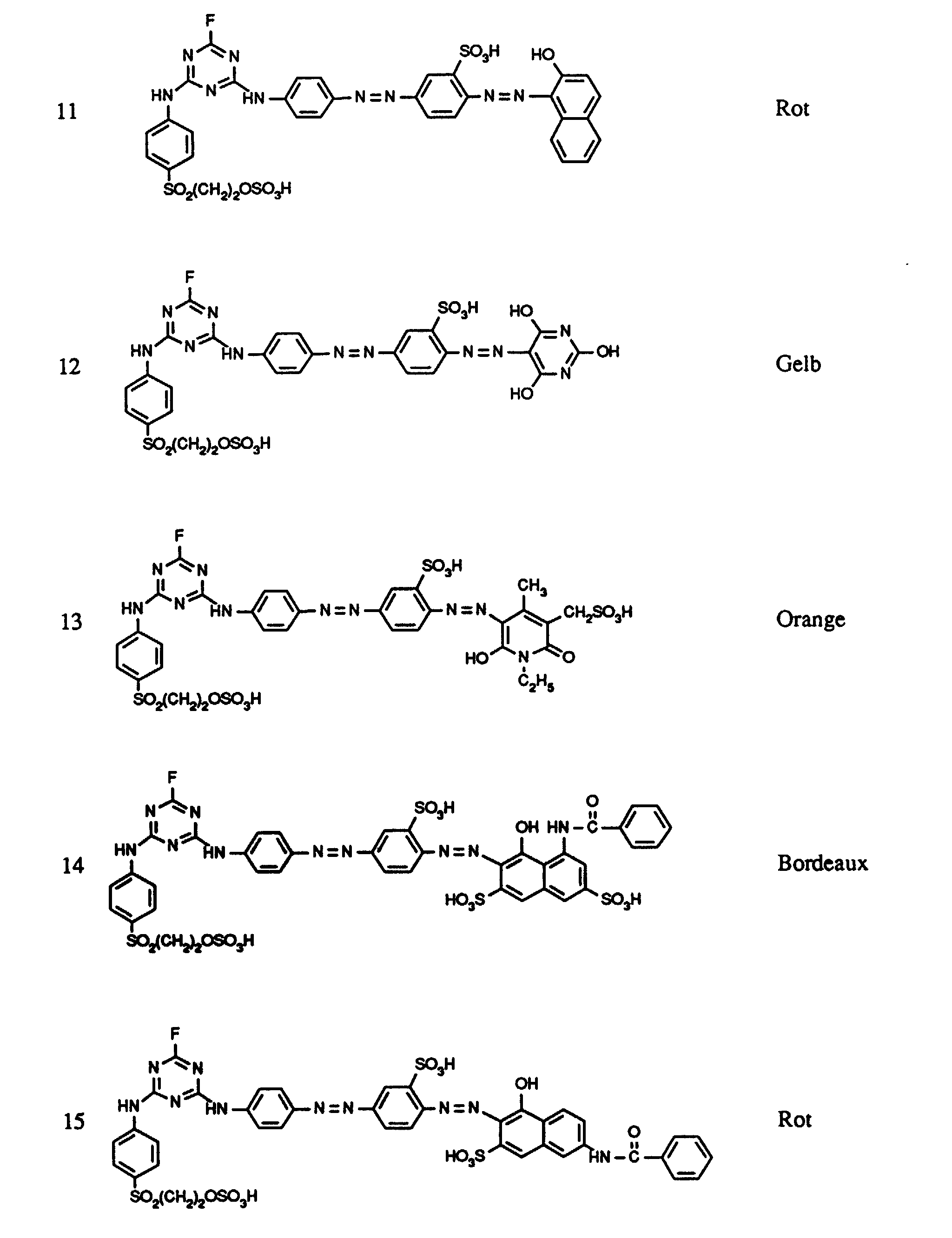

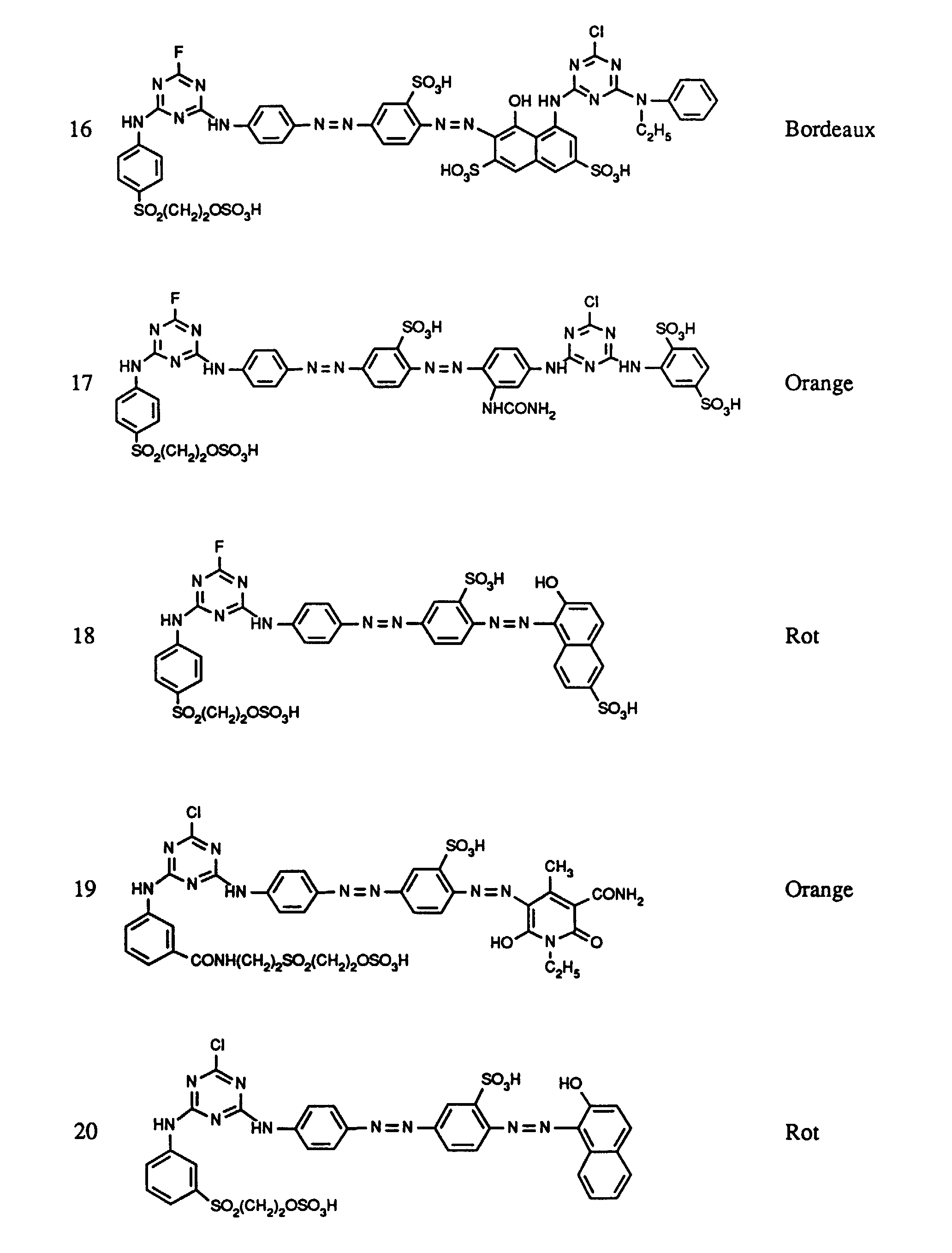

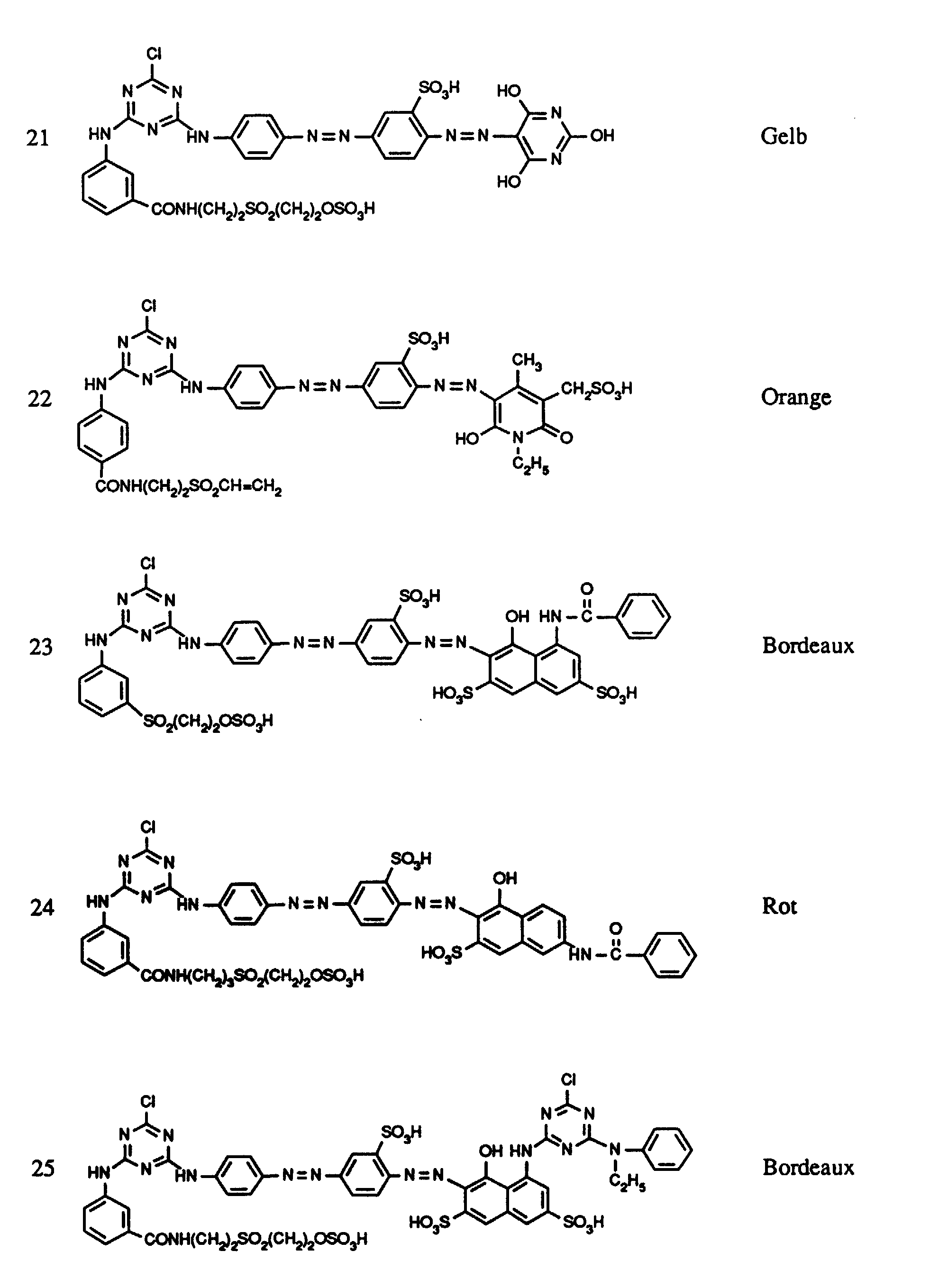

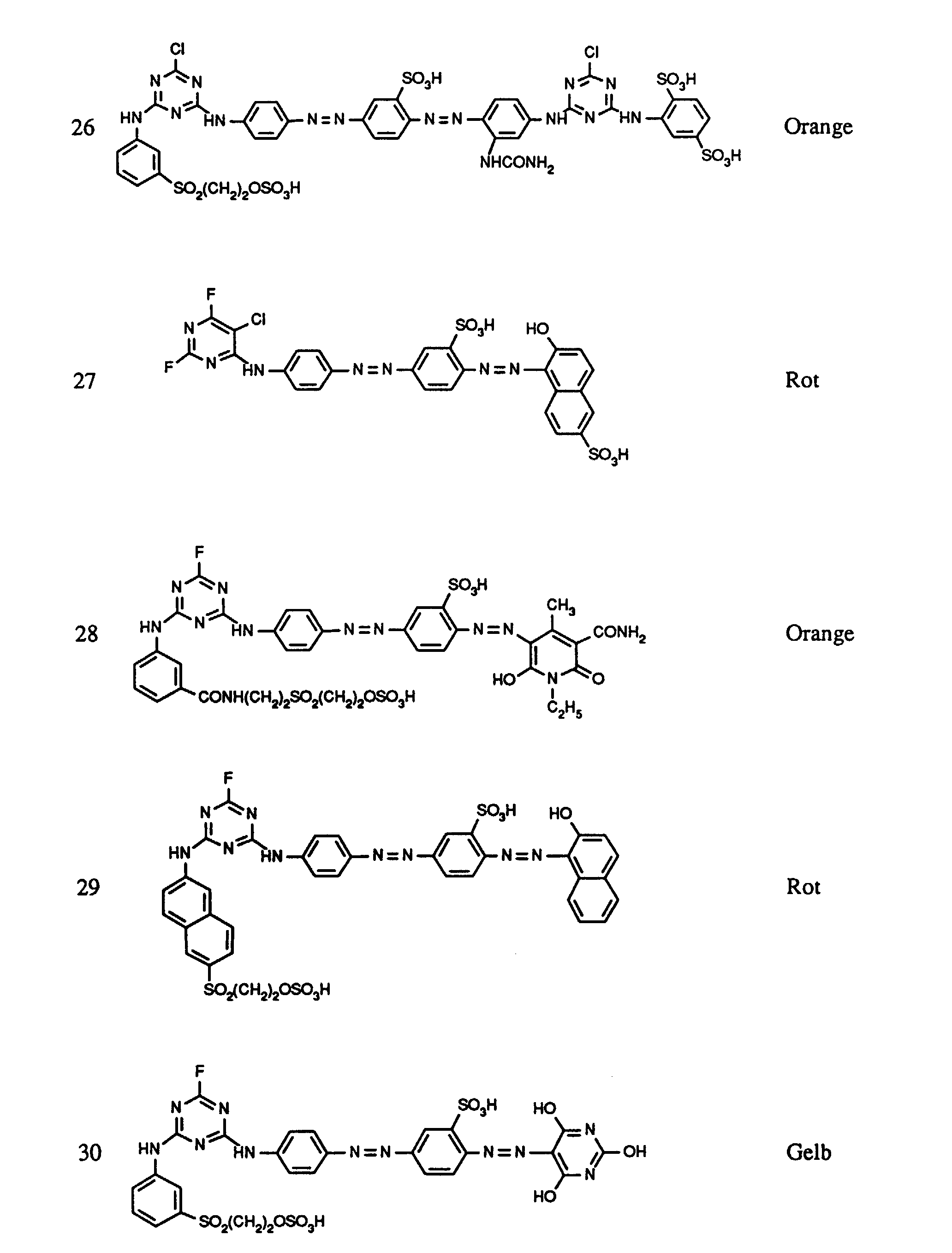

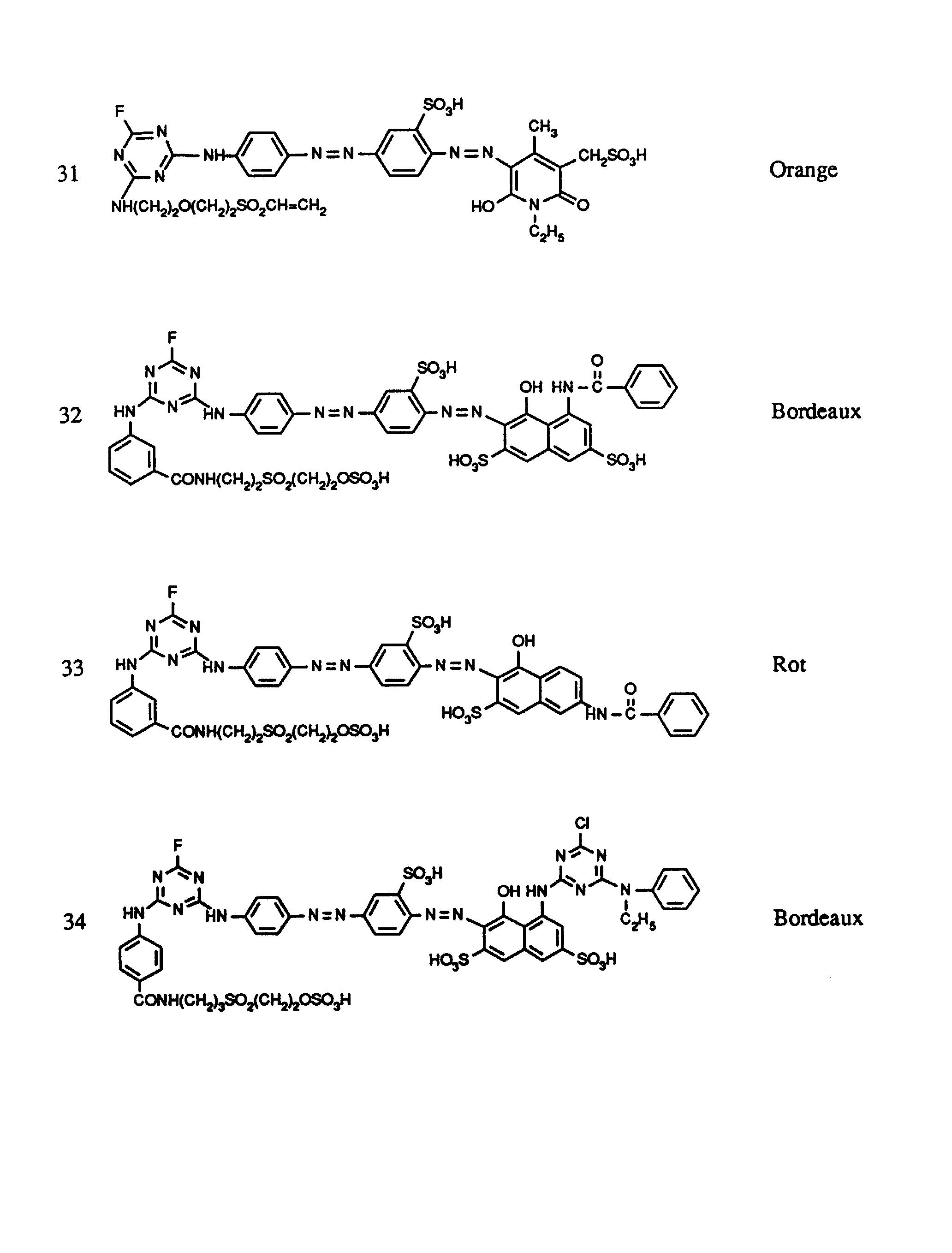

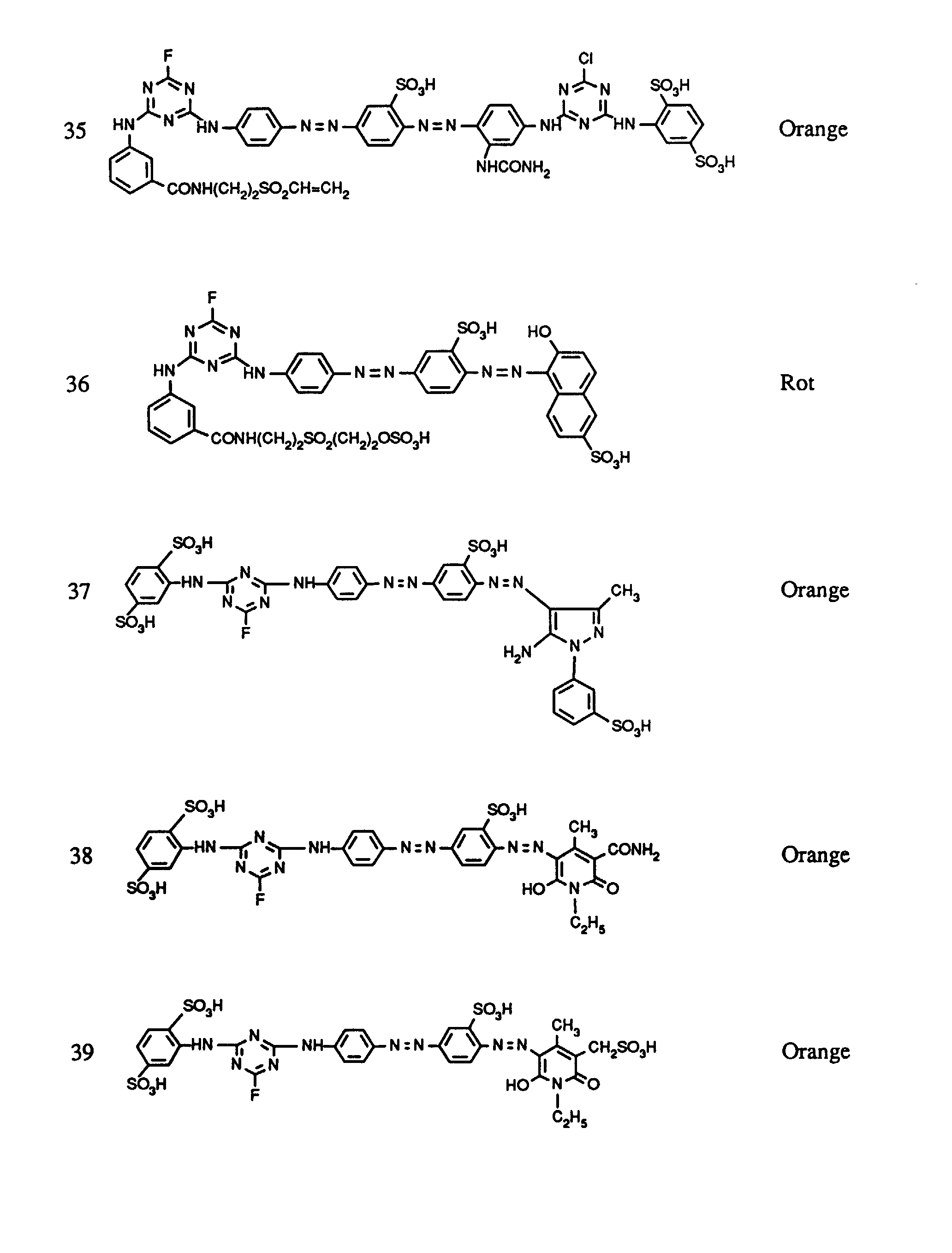

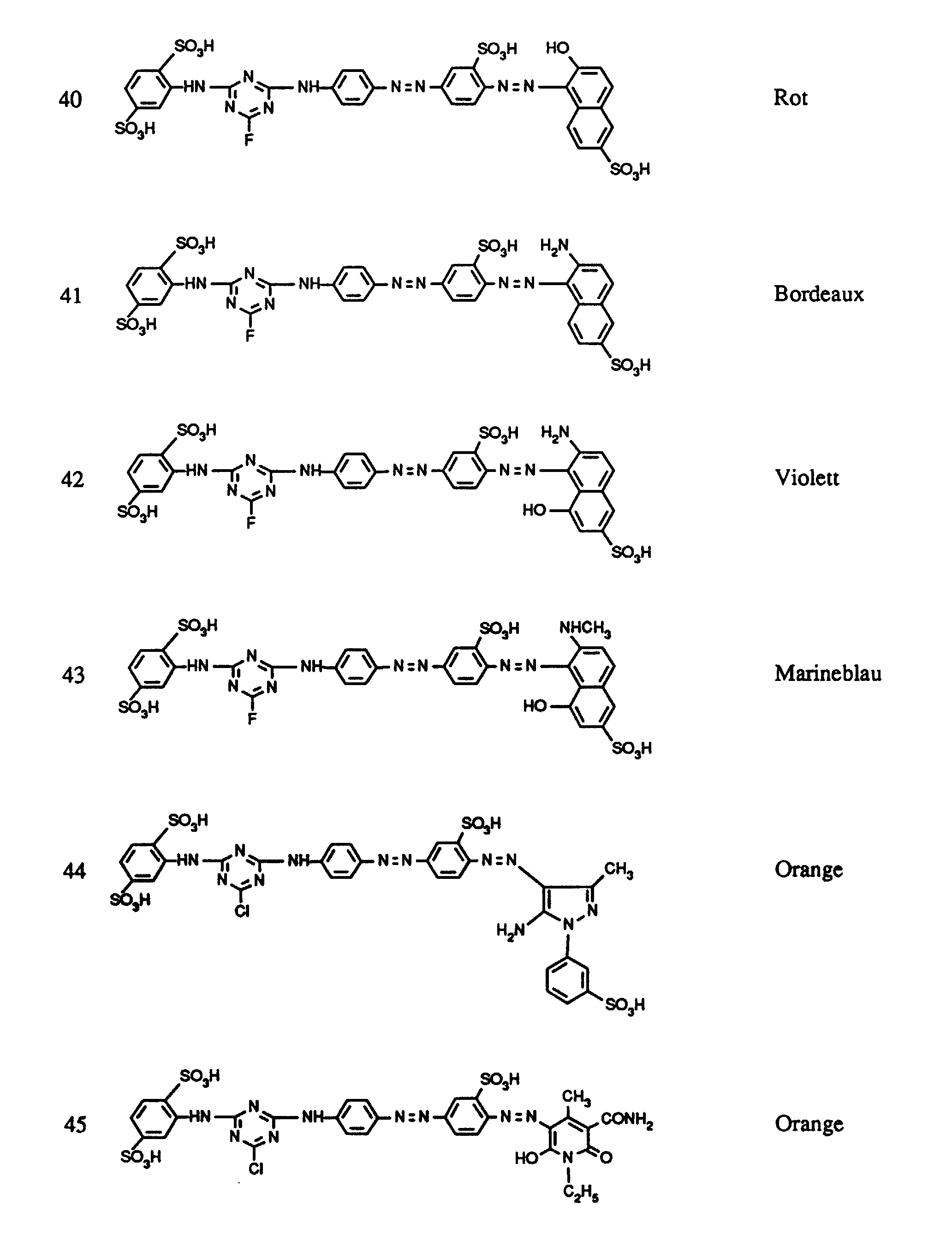

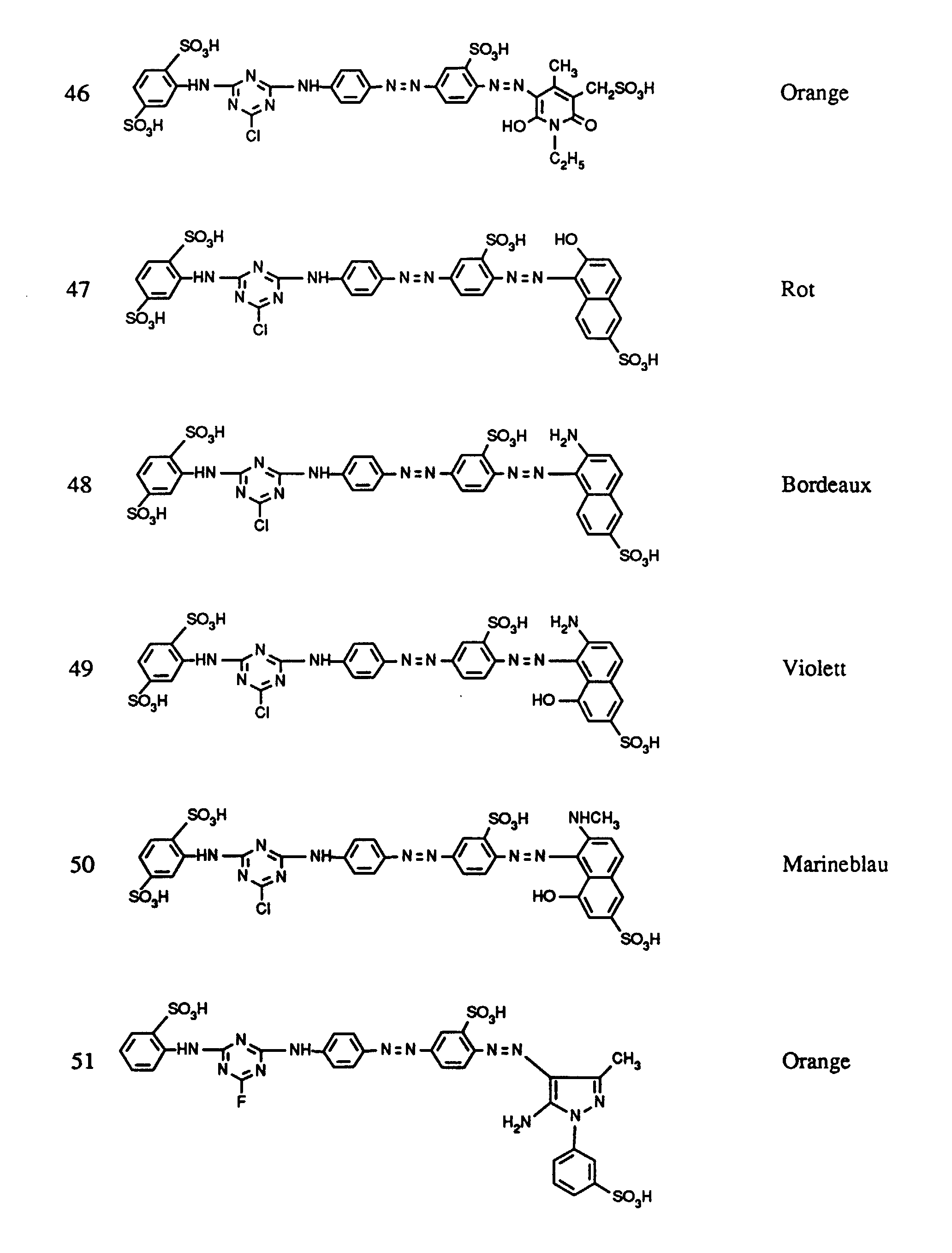

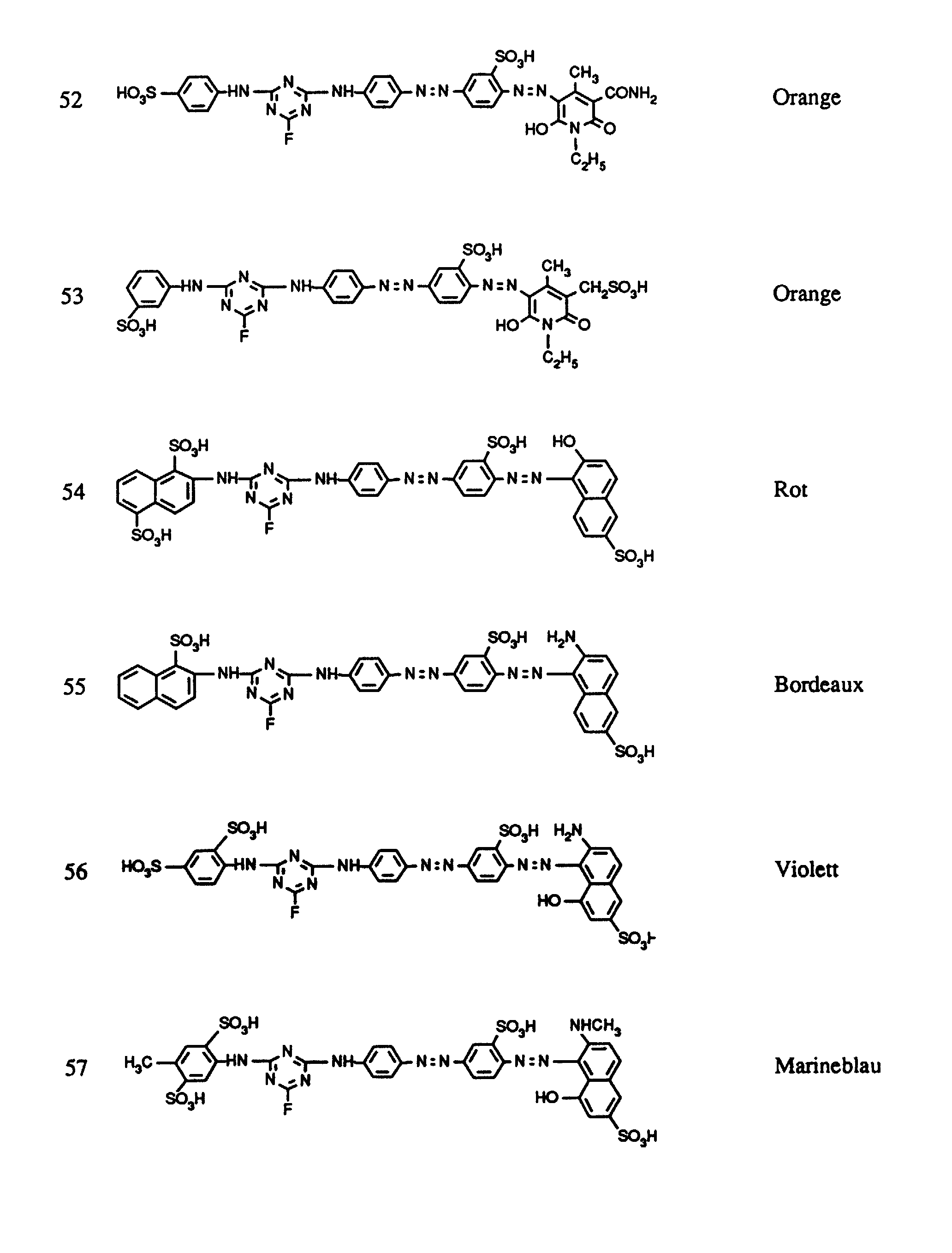

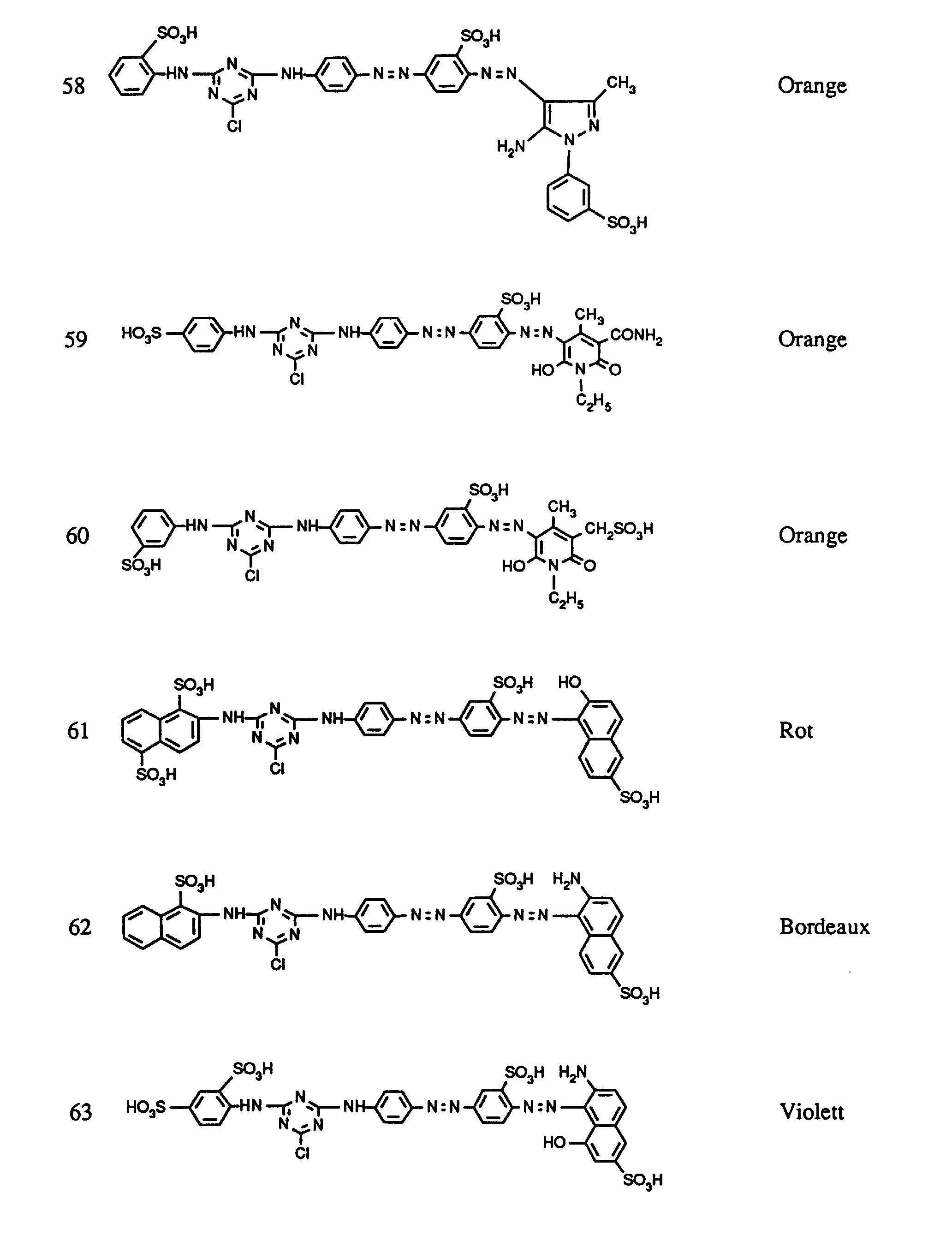

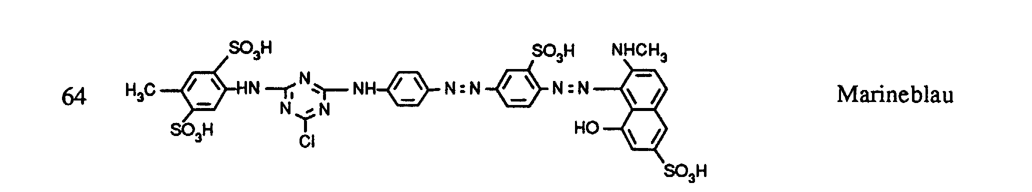

### Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 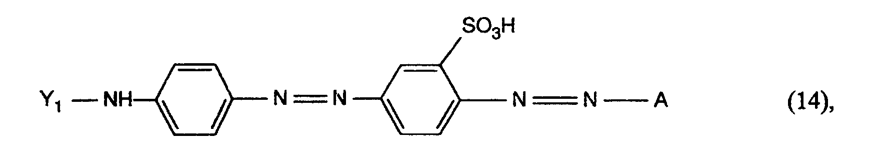
worin A ein Rest der Benzolreihe, der Naphthalinreihe oder der heterocyclischen Reihe ist, und
Y₁ ein gegebenenfalls weitersubstituierter Halogentriazin- oder
Halogenpyrimidin-Reaktivrest ist.

2. Reaktivfarbstoffe gemäss Anspruch 1, worin Y₁ ein Reaktivrest der Formel 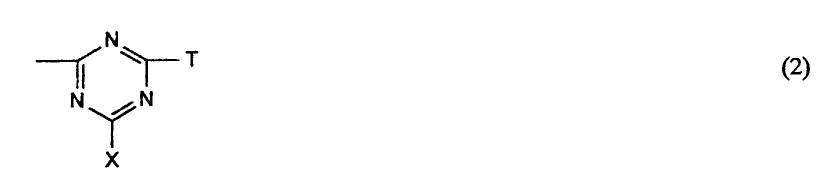 oder 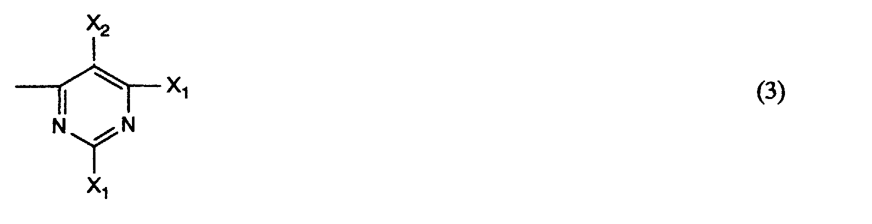 ist, worin X, X₁ und X₂ Halogen bedeuten und T Halogen oder im Phenylring oder Naphthylring unsubstituiertes oder durch Sulfo, Carboxy, C₂-C₄-Alkanoylamino, C₁-C₄-Alkyl oder C₁-C₄-Alkoxy substituiertes Phenylamino, N-C₁-C₄-Alkyl-N-phenylamino, Naphthylamino oder N-C₁-C₄-Alkyl-N-naphthylamino ist, oder worin T ein faserreaktiver Rest der Formel 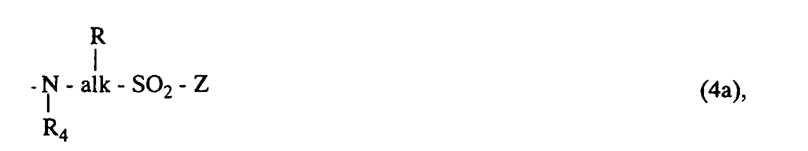 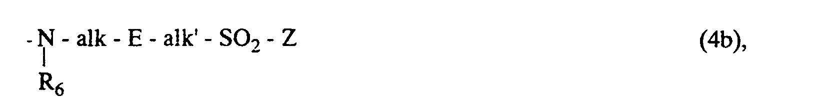 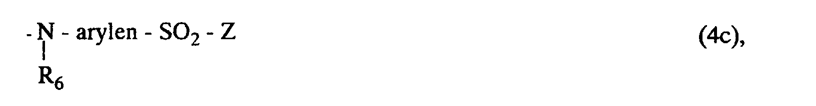 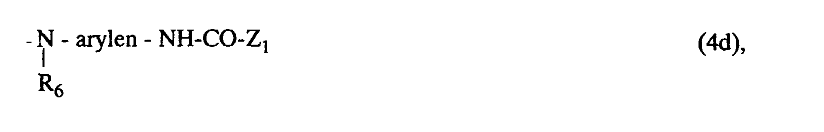 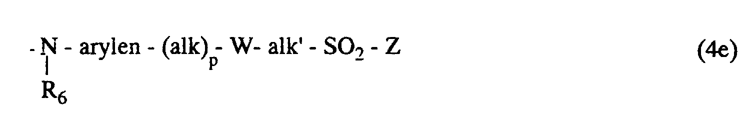 oder 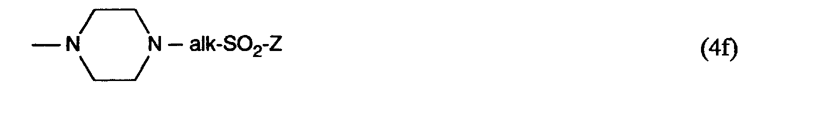 ist, wobei W eine Gruppe der Formel -SO₂-NR₄-, -CONR₄- oder -NR₄CO- ist, R₄ Wasserstoff, unsubstituiertes oder durch Hydroxy, Sulfo, Sulfato, Carboxy oder Cyano substituiertes C₁-C₄-Alkyl oder ein Rest der Formel 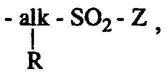 R₆ Wasserstoff oder unsubstituiertes oder durch Hydroxy, Sulfo, Sulfato, Carboxy oder Cyano substituiertes C₁-C₄-Alkyl, R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z eine Gruppe der Formel -CH=CH₂ oder -CH₂-CH₂-U₁ und U₁ eine Abgangsgruppe ist, Z₁ eine Gruppe der Formel 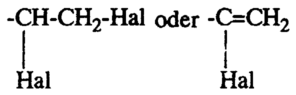 und Hal Halogen bedeutet, E der Rest -O- oder -NR₅- und R₅ Wasserstoff oder C₁-C₄-Alkyl ist, alk und alk' unabhängig voneinander C₁-C₆-Alkylen bedeuten, arylen einen unsubstituierten oder durch Sulfo, Carboxy, C₁-C₄-Alkyl, C₁-C₄-Alkoxy, C₂-C₄-Alkanoylamino oder Halogen substituierten Phenylen- oder Naphthylenrest bedeutet und p 0 oder 1 ist.

3. Reaktivfarbstoffe gemäss Anspruch 2, worin W eine Gruppe der Formel -CONH- oder -NHCO-, R, R₄, R₅ und R₆ Wasserstoff, E der Rest -O- oder -NH- und U₁ eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H, ist.

4. Reaktivfarbstoffe gemäss einem der Ansprüche 1 bis 3, worin A ein gegebenenfalls substituierter Benzol-, Naphthalin-, Pyrazol-, 6-Hydroxypyrid-(2)-on- oder Pyrimidinrest ist.

5. Reaktivfarbstoffe gemäss einem der Ansprüche 1 bis 4, worin A ein Rest der Formel 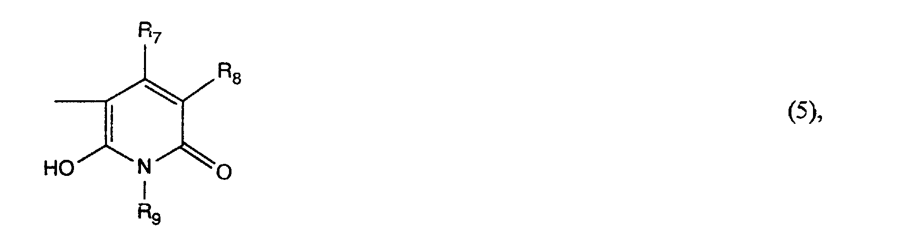 worin R₇ und R₉ unabhängig voneinander Wasserstoff, C₁-C₄-Alkyl oder gegebenenfalls durch C₁-C₄-Alkyl, C₁-C₄-Alkoxy, C₂-C₄-Alkanoylamino, Halogen oder Sulfo substituiertes Phenyl bedeuten und R₈ Wasserstoff, Cyano, Carbamoyl oder Sulfomethyl ist,
oder ein Rest der Formel 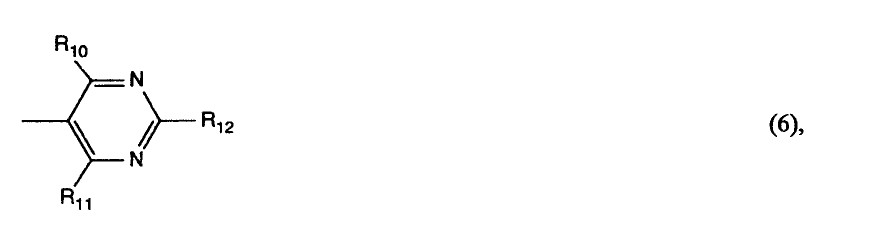 worin R₁₀ und R₁₁ unabhängig voneinander Hydroxyl, Amino oder durch C₁-C₁₂-Alkyl substituiertes Amino, worin der C₁-C₁₂-Alkylrest gegebenenfalls durch Hydroxyl, Sulfo oder Sulfato weitersubstituiert ist und mit Ausnahme von Methyl durch Sauerstoff unterbrochen sein kann, bedeuten und R₁₂ Wasserstoff, C₁-C₄-Alkyl, Hydroxyl, gegebenenfalls durch Cyano substituiertes Amino oder gegebenenfalls durch C₁-C₄-Alkyl, C₁-C₄-Alkoxy, C₂-C₄-Alkanoylamino, Halogen oder Sulfo substituiertes Phenyl bedeutet,
oder ein Rest der Formel 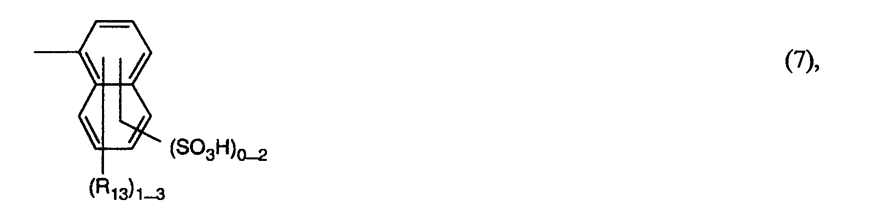 worin (R₁₃)₁₋₃ für 1 bis 3 gleiche oder voneinander verschiedene Substituenten aus der Gruppe Wasserstoff, C₁-C₄-Alkyl, C₁-C₄-Alkoxy, C₂-C₄-Alkanoylamino, Halogen, Hydroxyl, Amino oder N-mono- oder N,N-Di-C₁-C₄-Alkylamino steht,
oder ein Rest der Formel 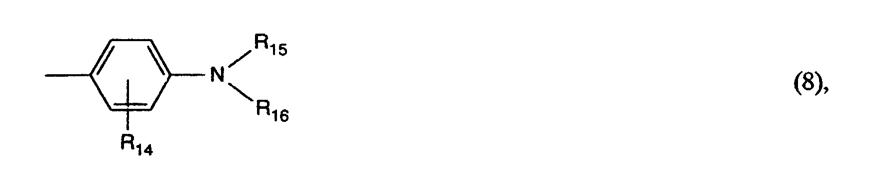 worin R₁₄ Wasserstoff, C₁-C₄-Alkyl, C₁-C₄-Alkoxy, C₂-C₆-Alkanoylamino, C₂-C₈-Alkoxycarbonylamino, Ureido, Halogen oder Sulfo ist und R₁₅ und R₁₆ unabhängig voneinander Wasserstoff, ein gegebenenfalls weitersubstituierter Halogenpyrimidin- oder Halogentriazin-Reaktivrest oder gegebenenfalls durch Hydroxy, Sulfo, Sulfato, Phenyl oder C₅-C₇-Cycloalkyl substituiertes C₁-C₈-Alkyl sind, wobei der Phenylrest durch C₁-C₄-Alkyl, C₁-C₄-Alkoxy, C₂-C₄-Alkanoylamino, Halogen oder Sulfo und der C₅-C₇-Cycloalkylrest durch C₁-C₄-Alkyl weitersubstituiert sein kann,
oder ein Rest der Formel 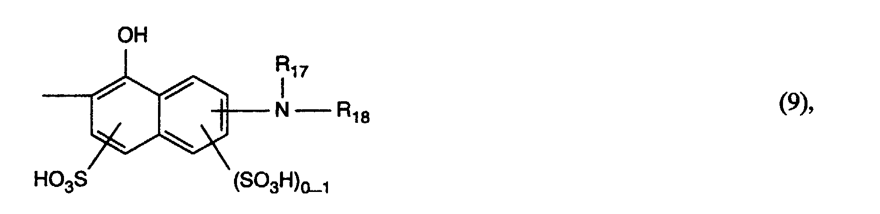 worin R₁₇ Wasserstoff oder C₁-C₄-Alkyl und R₁₈ C₂-C₆-Alkanoyl, gegebenenfalls durch C₁-C₄-Alkyl, C₁-C₄-Alkoxy, C₂-C₄-Alkanoylamino, Halogen oder Sulfo substituiertes Benzoyl oder einen gegebenenfalls weitersubstituierten Halogenpyrimidin- oder Halogentriazin-Reaktivrest bedeutet,
oder ein Rest der Formel 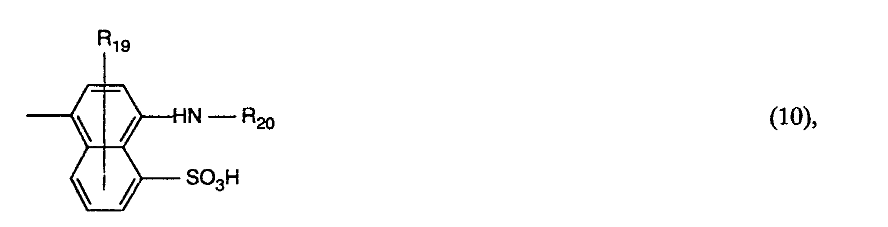 worin R₁₉ Wasserstoff, C₁-C₄-Alkyl, C₁-C₄-Alkoxy, C₂-C₄-Alkanoylamino, Halogen oder Sulfo ist und R₂₀ gegebenenfalls durch C₁-C₄-Alkyl, C₁-C₄-Alkoxy, C₂-C₄-Alkanoylamino, Halogen oder Sulfo substituiertes Phenyl oder einen gegebenenfalls weitersubstituierten Halogenpyrimidin- oder Halogentriazin-Reaktivrest bedeutet,
oder ein Rest der Formel 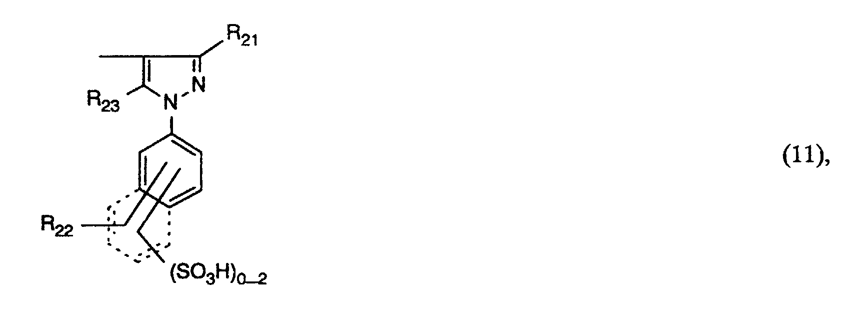 worin R₂₁ C₁-C₄-Alkyl oder Carboxyl, R₂₂ Wasserstoff, C₁-C₄-Alkyl, C₁-C₄-Alkoxy, C₂-C₄-Alkanoylamino oder Halogen und R₂₃ Hydroxyl oder Amino bedeutet, ist.

6. Verfahren zur Herstellung von Reaktivfarbstoffen gemäss Anspruch 1, dadurch gekennzeichnet, dass man ein Amin der Formel 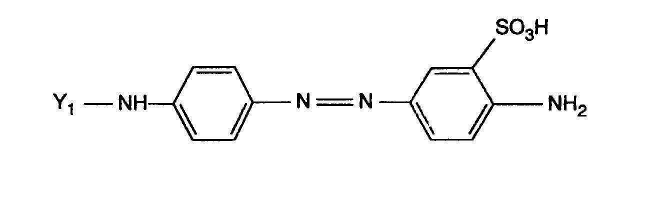 diazotiert und auf eine Verbindung der Formel
H-A (16)
kuppelt und gegebenenfalls eine weitere Umwandlungsreaktion anschliesst, wobei Y₁ und A die in Anspruch 1 angegebenen Bedeutungen haben.

7. Verwendung der Reaktivfarbstoffe gemäss einem der Ansprüche 1 bis 5 bzw. der gemäss Anspruch 6 erhaltenen Reaktivfarbstoffe zum Färben oder Bedrucken von hydroxylgruppenhaltigen oder stickstoffhaltigen Fasermaterialien.

8. Verwendung gemäss Anspruch 7 zum Färben oder Bedrucken von cellulosehaltigen Fasermaterialien oder natürlichen oder synthetischen Polyamidfasermaterialien.

## Claims

1. A reactive dye of the formula 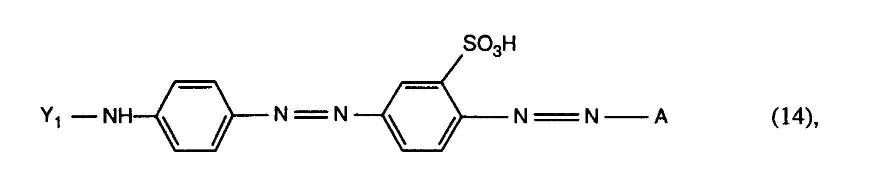 in which A is a radical of the benzene series, the naphthalene series or of the heterocyclic series, and
Y₁ is a halotriazine or halopyrimidine reactive radical which is unsubstituted or further substituted.

2. A reactive dye according to claim 1, in which Y₁ is a reactive radical of the formula 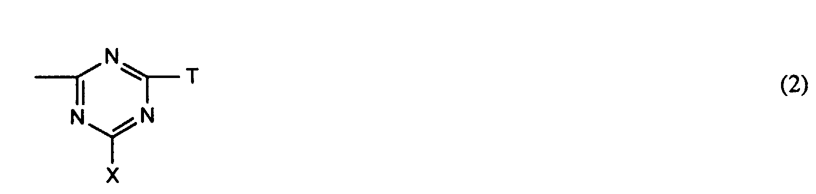 or 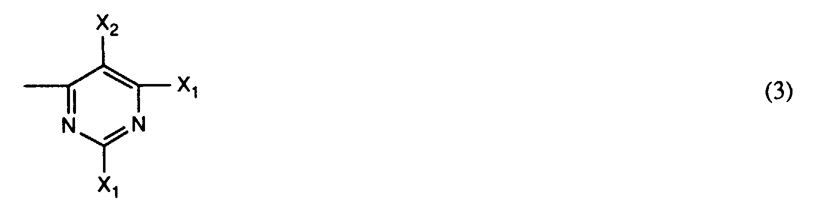 in which X, X₁ and X₂ are halogen and T is halogen or phenylamino, N-C₁-C₄alkyl-N-phenylamino, naphthylamino or N-C₁-C₄alkyl-N-naphthylamino which is unsubstituted in the phenyl ring or naphthyl ring or substituted by sulfo, carboxyl, C₂-C₄alkanoylarnino, C₁-C₄alkyl or C₁-C₄alkoxy, or
in which T is a fibre-reactive radical of the formula 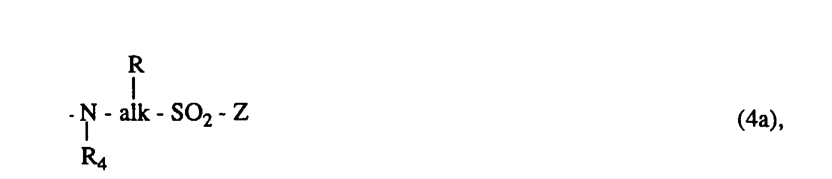 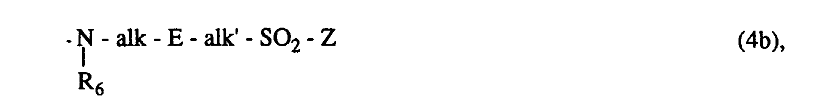 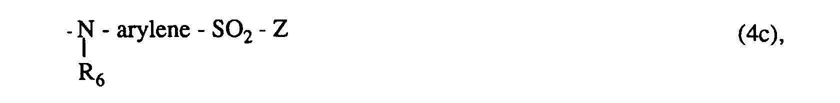 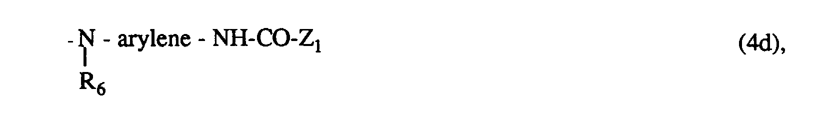 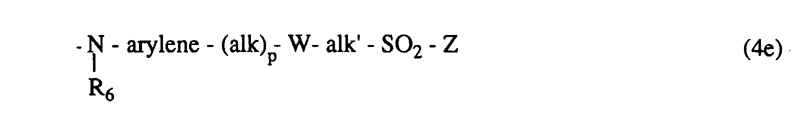 or 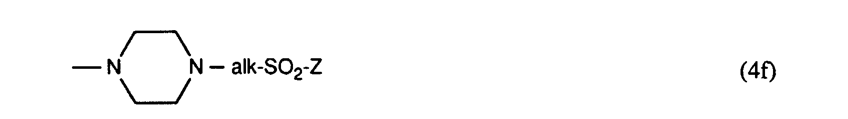 in which W is a group of the formula -SO₂-NR₄-, -CONR₄- or -NR₄CO- ,R₄ is hydrogen, C₁-C₄alkyl which is unsubstituted or substituted by hydroxyl, sulfo, sulfato, carboxyl or cyano, or a radical of the formula 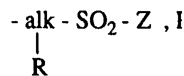 R₆ is hydrogen or C₁-C₄alkyl which is unsubstituted or substituted by hydroxyl, sulfo, sulfato, carboxyl or cyano, R is hydrogen, hydroxyl, sulfo, sulfato, carboxyl, cyano, halogen, C₁-C₄alkoxycarbonyl, C₁-C₄alkanoyloxy, carbamoyl or the group -SO₂-Z , Z is a group of the formula -CH=CH₂ or -CH₂-CH₂-U₁ and U₁ is a leaving group, Z₁ is a group of the formula 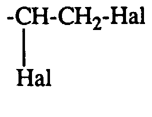 or 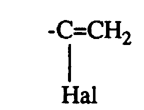 and Hal is halogen, E is the radical -O- or -NR₅- and R₅ is hydrogen or C₁-C₄alkyl, alk and alk' independently of one another are C₁-C₆alkylene, arylene is a phenylene or naphthylene radical which is unsubstituted or substituted by sulfo, carboxyl, C₁-C₄alkyl, C₁-C₄alkoxy, C₂-C₄alkanoylamino or halogen and p is 0 or 1.

3. A reactive dye according to claim 2, in which W is a group of the formula -CONH- or -NHCO-, R, R₄, R₅ and R₆ are hydrogen, E is the radical -O- or -NH- and U₁ is a group of the formula -Cl, -OSO₃H, -SSO₃H, -OCO-CH₃, -OCO-C₆H₅ or -OPO₃H₂, in particular a group of the formula -Cl or -OSO₃H.

4. A reactive dye according to any one of claims 1 to 3, in which A is an unsubstituted or substituted benzene, naphthalene, pyrazole, 6-hydroxypyrid-2-one or pyrimidine radical.

5. A reactive dye according to any one of claims 1 to 4, in which A is a radical of the formula 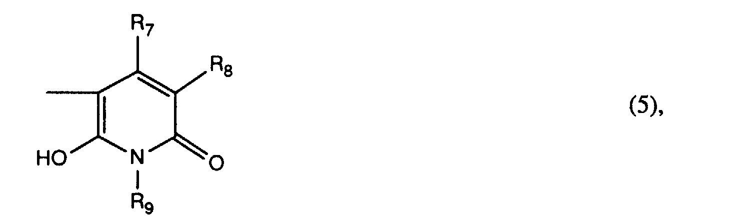 in which R₇ and R₉ independently of one another are hydrogen, C₁-C₄alkyl, or phenyl which is unsubstituted or substituted by C₁-C₄alkyl, C₁-C₄alkoxy, C₂-C₄alkanoylamino, halogen or sulfo and R₈ is hydrogen, cyano, carbamoyl or sulfomethyl,
or a radical of the formula 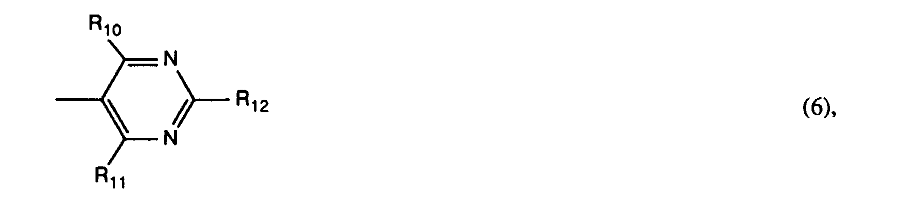 in which R₁₀ and R₁₁ independently of one another are hydroxyl, amino or amino which is substituted by C₁-C₁₂alkyl, in which the C₁-C₁₂alkyl radical is unsubstituted or further substituted by hydroxyl, sulfo or sulfato and, with the exception of methyl, can be interrupted by oxygen, and R₁₂ is hydrogen, C₁-C₄alkyl, hydroxyl, amino which is unsubstituted or substituted by cyano or phenyl which is unsubstituted or substituted by C₁-C₄alkyl, C₁-C₄alkoxy, C₂-C₄alkanoylamino, halogen or sulfo,
or a radical of the formula 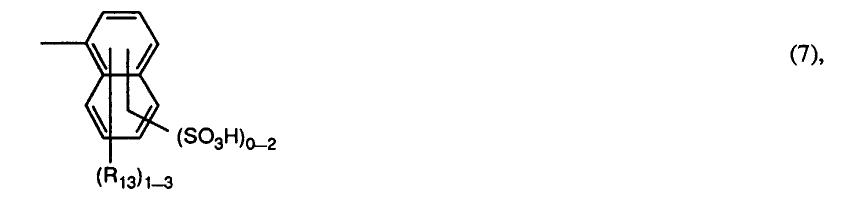 in which (R₁₃)₁₋₃ is 1 to 3 identical or different substituents from the group comprising hydrogen, C₁-C₄alkyl, C₁-C₄alkoxy, C₂-C₄alkanoylamino, halogen, hydroxyl, amino or N-mono- or N,N-di-C₁-C₄alkylamino,
or a radical of the formula 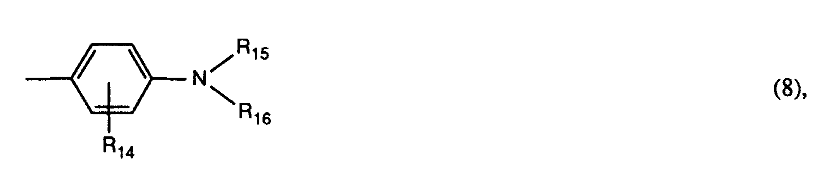 in which R₁₄ is hydrogen, C₁-C₄alkyl, C₁-C₄alkoxy, C₂-C₆alkanoylamino, C₂-C₈alkoxycarbonylamino, ureido, halogen or sulfo and R₁₅ and R₁₆ independently of one another are hydrogen, a halopyrimidine or halotriazine reactive radical which is unsubstituted or further substituted or C₁-C₈alkyl which is unsubstituted or substituted by hydroxyl, sulfo, sulfato, phenyl or C₅-C₇cycloalkyl, in which the phenyl radical can be further substituted by C₁-C₄alkyl, C₁-C₄alkoxy, C₂-C₄alkanoylamino, halogen or sulfo and the C₅-C₇cycloalkyl radical can be further substituted by C₁-C₄alkyl,
or a radical of the formula 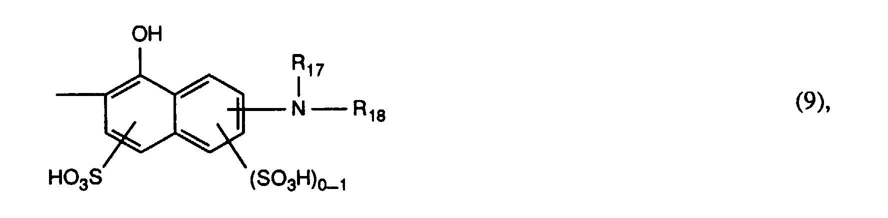 in which R₁₇ is hydrogen or C₁-C₄alkyl and R₁₈ is C₂-C₆alkanoyl, benzoyl which is unsubstituted or substituted by C₁-C₄alkyl, C₁-C₄alkoxy, C₂-C₄alkanoylamino, halogen or sulfo or a halopyrimidine or halotriazine reactive radical which is unsubstituted or further substituted,
or a radical of the formula 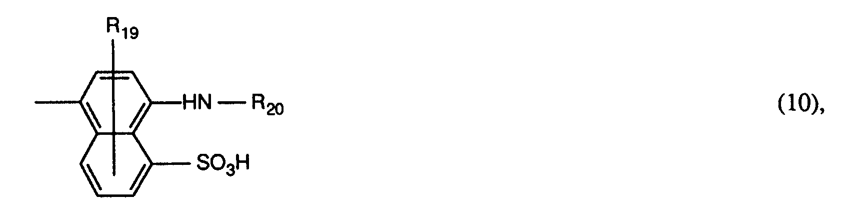 in which R₁₉ is hydrogen, C₁-C₄alkyl, C₁-C₄alkoxy, C₂-C₄alkanoylamino, halogen or sulfo and R₂₀ is phenyl which is unsubstituted or substituted by C₁-C₄alkyl, C₁-C₄alkoxy, C₂-C₄alkanoylamino, halogen or sulfo or a halopyrimidine or halotriazine reactive radical which is unsubstituted or further substituted,
or a radical of the formula 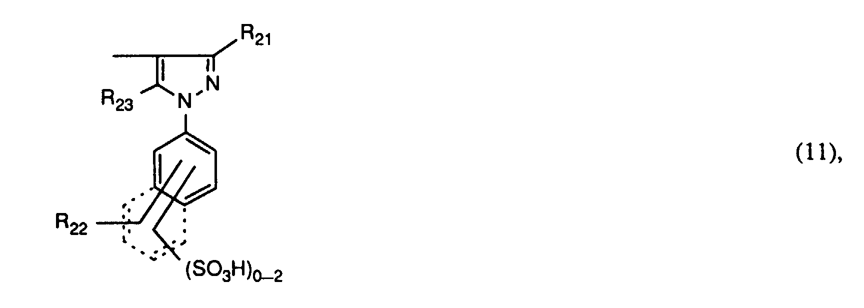 in which R₂₁ is C₁-C₄alkyl or carboxyl, R₂₂ is hydrogen, C₁-C₄alkyl, C₁-C₄alkoxy, C₂-C₄alkanoylamino or halogen and R₂₃ is hydroxyl or amino.

6. A process for the preparation of a reactive dye according to claim 1, which comprises diazotising an amine of the formula 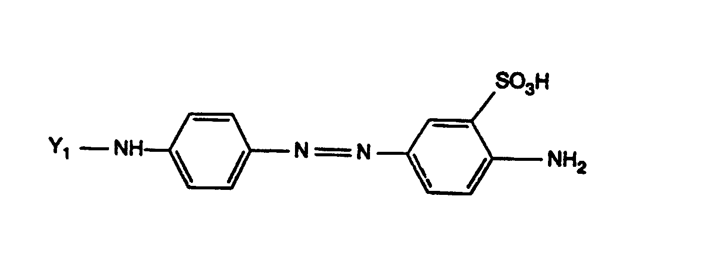 and coupling the diazotisation product to a compound of the formula
H-A (16)
and if appropriate subsequently carrying out a further conversion reaction, in which Y₁ and A are as defined in claim 1.

7. The use of a reactive dye according to any one of claims 1 to 5 or of a reactive dye obtained according to claim 6 for dyeing or printing fibre materials containing hydroxyl groups or nitrogen.

8. The use according to claim 7 for dyeing or printing cellulosic fibre materials or naturally occurring or synthetic polyamide fibre materials.

## Revendications

1. Colorant réactifs de formule 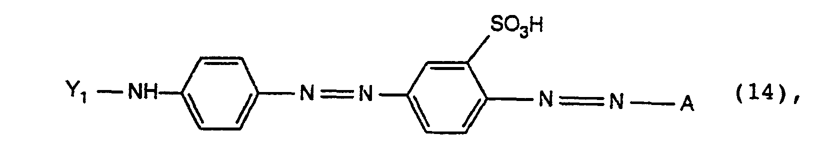 dans laquelle A représente le reste de la famille du benzène, de la famille du naphtalène ou de la famille des hétérocycles, et
Y₁ représente un reste halogénotriazine ou halogénopyrimidine, éventuellement substitués davantage.

2. Colorants réactifs selon la revendication 1, dans lesquels Y₁ représente un reste réactif de formule 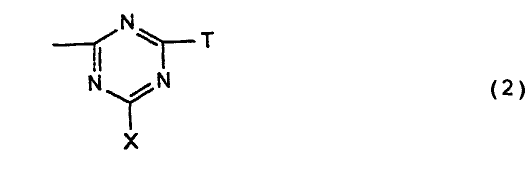 ou 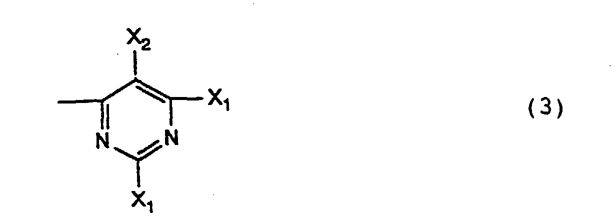 dans lesquells X, X₁ et X₂ représentent un atome d'halogène et T représente un atome d'halogène ou un groupe phénylamino, N-(alkyl en C₁-C₄)-N-phénylamino, naphtylamino ou N-(alkyl en C₁-C₄)-N-naphtylamino non substitués ou substitués sur le cycle phényle ou naphtyle par des groupes sulfo, carboxy, (alcanoyl en C₁-C₄)amino, alkyle en C₁-C₄ ou alkoxy en C₁-C₄, ou dans lesquelles T est un reste réactif sur la fibre de formule 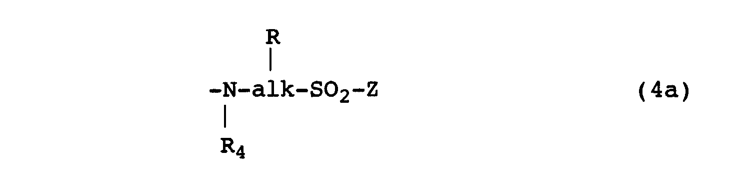 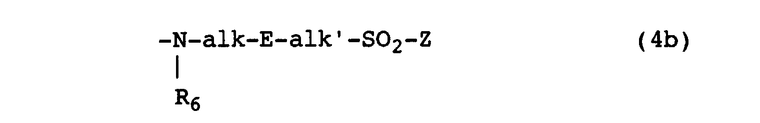 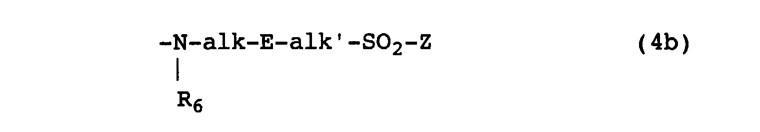 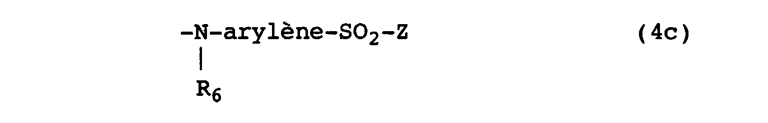 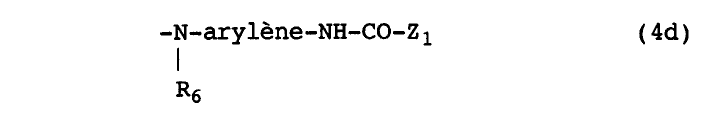 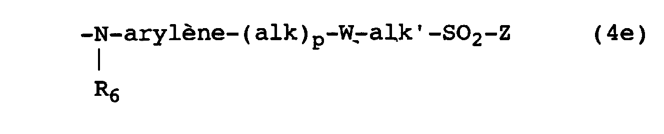 ou 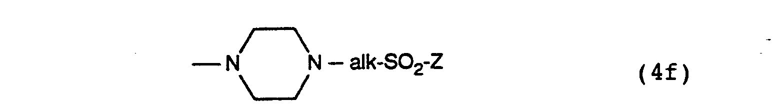 W étant un groupe de formule -SO₂-NR₄-, CONR₄- ou -NR₄-CO, R₄ représente un atome d'hydrogène, un groupe alkyle en C₁-C₄ non substitué ou substitué par des groupes hydroxy, sulfo, sulfato, carboxy ou cyano, ou un reste de formule 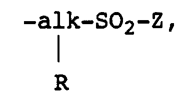 R₆ représente un atome d'hydrogène ou un groupe alkyle en C₁-C₄ non substitué ou substitué par des groupes hydroxy, sulfo, sulfato, carboxy ou cyano, R représente un atome d'hydrogène, des groupes hydroxy, sulfo, sulfato, carboxy, cyano, halogène, (alkoxy en C₁-C₄)carbonyle, alkanoyloxy en C₁-C₄, carbamoyle ou le groupe -SO₂-Z, Z représente un groupe de formule -CH=CH₂ ou CH₂-CH₂-U₁ et U₁ représente un groupe partant, Z₁ représente un groupe de formule 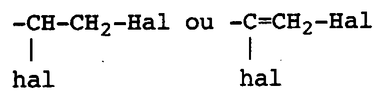 et Hal représente halogène, E représente le reste -O- ou -NR₅- et R₅ représente un atome d'hydrogène ou un groupe alkyle en C₁-C₄, alk et alk', indépendamment l'un de l'autre, représentent un groupe alkylène en C₁-C₆, arylène représente un reste phénylène ou naphtylène non substitués ou substitués par des groupes sulfo, carboxy, alkyle en C₁-C₄, alkoxy en C₁-C₄, (alkanoyl en C₁-C₄)amino ou halogène et p vaut 0 ou 1.

3. Colorants réactifs selon la revendication 2, dans lequels W représente un groupe de formule -CONH- ou -NHCO-, R, R₄, R₅ et R₆ représentent un atome d'hydrogène, E représente le reste -O- ou -NH- et U₁ représente un groupe de formule Cl, -OSO₃H, -SSO₃H, -OCO-CH₃, -OCO-C₆H₅ ou -OPO₃H₂, en particulier un groupe de formule -Cl ou -OSO₃H.

4. Colorants réactifs selon l'une des revendications 1 à 3, dans lesquels A représente un reste benzène, naphtalène, pyrazole, 6-hydroxypyrid-(2)-one ou pyrimidine éventuellement substitué.

5. Colorants réactifs selon l'une des revendications 1 à 4, dans lesquels A représente un reste de formule 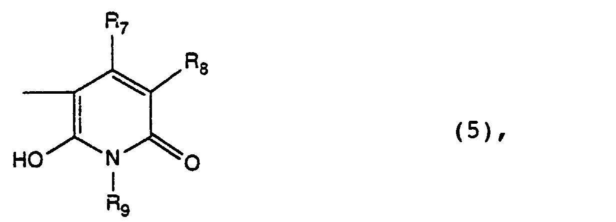 dans laquelle R₇ et R₉ représentent, indépendamment l'un de l'autre, un atome d'hydrogène, un groupe alkyle en C₁-C₄ ou un groupe phényle éventuellement substitué par des groupes alkyle en C₁-C₄, alkoxy en C₁-C₄, (alcanoyl en C₂-C₄)amino, halogène ou sulfo, et R₈ représente un atome d'hydrogène, des groupes cyano, carbamoyle ou sulfométhyle,
ou un reste de formule 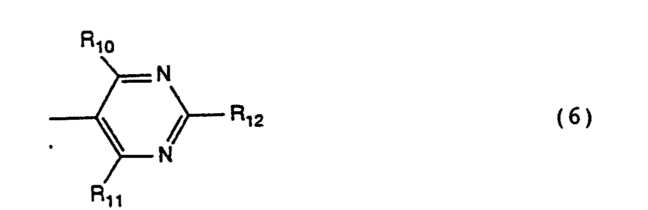 dans laquelle R₁₀ et R₁₁ représentent, indépendamment l'un de l'autre, des groupes hydroxyle, amino ou amino substitué par alkyle en C₁-C₁₂, où le reste alkyle en C₁-C₁₂ étant éventuellement substitué davantage par des groupes hydroxyle, sulfo ou sulfato et pouvant être interrompu, à l'exception de méthyle, par des atomes d'oxygène, et R₁₂ représente des atomes d'hydrogène, des groupes alkyle en C₁-C₄, hydroxyle, amino éventuellement substitué par cyano ou phényle éventuellement substitué par des groupes alkyle en C₁-C₄, alkoxy en C₁-C₄, (alcanoyl en C₂-C₄)amino, halogène ou sulfo, ou représente un reste de formule 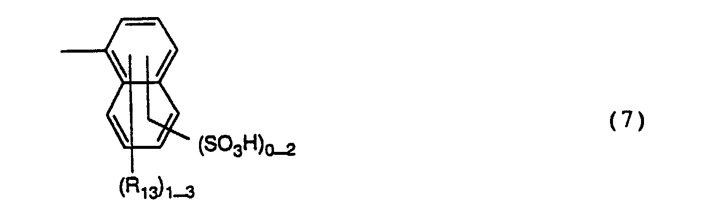 dans laquelle (R₁₃)₁₋₃ représente 1 à 3 substituants identiques ou différents pris dans le groupe comportant des atomes d'hydrogène, des groupes alkyle en C₁-C₄, alkoxy en C₁-C₄, (alcanoyl en C₂-C₄)amino, halogène, hydroxyle, amino ou N-mono- ou N,N-di(alkyle en C₁-C₄)-amino,
ou un reste de formule 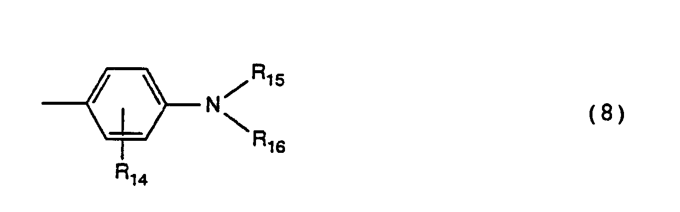 dans laquelle R₁₄ représente des atomes d'hydrogène, des groupes alkyle en C₁-C₄, alkoxy en C₁-C₄, (alcanoyl en C₂-C₆)amino, (alkoxy en C₂-C₈)carbonylamino, uréido, halogène ou sulfo et R₁₅ et R₁₆ représentent, indépendamment l'un de l'autre, un atome d'hydrogène, un reste réactif halogénopyrimidine ou halogénotriazine éventuellement substitués davantage, ou un groupe alkyle en C₁-C₈ éventuellement substitué par des groupes hydroxy, sulfo, sulfato, phényle ou cycloalkyle en C₅-C₇, le reste phényle pouvant être substitué davantage par des groupes alkyle en C₁-C₄, alkoxy en C₁-C₄, (alcanoyl en C₂-C₄)amino, halogène ou sulfo et le reste cycloalkyle en C₅-C₇ par alkyle en C₁-C₄,
ou un reste de formule 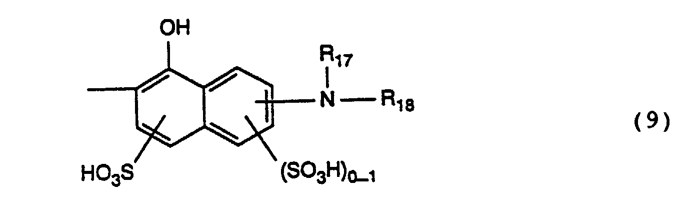 dans laquelle R₁₇ représente un atome d'hydrogène ou un groupe alkyle en C₁-C₄ et R₁₈ représente un groupe alcanoyle en C₂-C₆, un groupe benzoyle éventuellement substitué par des groupes alkyle en C₁-C₄, alkoxy en C₁-C₄, (alcanoyl en C₂-C₄)amino, halogène ou sulfo, ou un reste halogénopyrimidine ou halogénotriazine éventuellement substitutés davantage,
ou un reste de formule 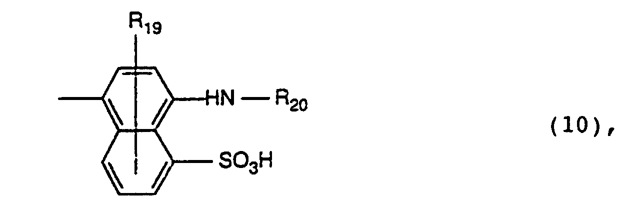 dans laquelle R₁₉ représente un atome d'hydrogène, des groupes alkyle en C₁-C₄, alkoxy en C₁-C₄, (alcanoyl en C₂-C₄)amino, halogène ou sulfo et R₂₀ représente un groupe phényle éventuellement substitué par des groupes alkyle en C₁-C₄, alkoxy en C₁-C₄, (alcanoyl en C₂-C₄)-amino, halogèno ou sulfo ou un reste réactif halogénopyrimidine ou halogénotriazine éventuellement substitués davantage
ou un reste de formule 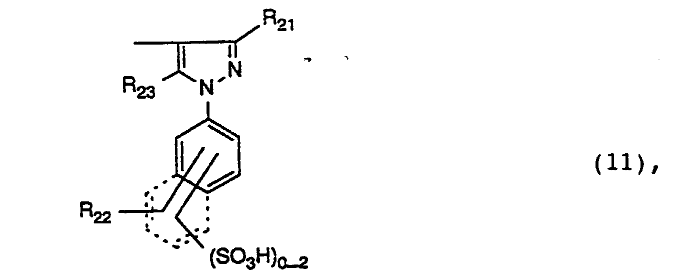 dans laquelle R₂₁ représente des groupes alkyle en C₁-C₄ ou carboxyle, R₂₂ représente un atome d'hydrogène, des groupes alkyle en C₁-C₄, alkoxy en C₁-C₄, (alcanoyl en C₂-C₄)amino ou halogène et R₂₃ représente un groupe hydroxy ou amino.

6. Procédé pour la préparation de colorants réactifs selon la revendication 1, caractérisé en ce que l'on diazote une amine de formule 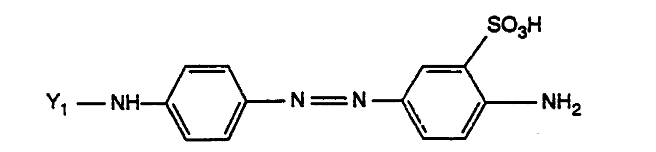 et on copule sur un composé de formule
H-A (16)
et éventuellement, on fait suivre par une autre réaction de transformation, Y₁ et A ayant les significations données dans la revendication 1.

7. Utilisation des colorants réactifs selon l'une des revendications 1 à 5, respectivement des colorants réactifs obtenus selon la revendication 6, pour la teinture ou l'impression de matières fibreuses contenant des groupes hydroxyle ou de l'azote.

8. Utilisation selon la revendication 7 pour la teinture ou l'impression de matières fibreuses cellulosiques ou de matières fibreuses polyamides naturelles ou synthétiques.
